# EUROPEAN PATENT APPLICATION

(11) **EP 4 707 893 A1**
(43) Date of publication of application: **11.03.2026**
(21) Application number: 24797409.0
(22) Date of filing: 24.04.2024
(51) Int. Cl.: G02B 7/00, G02B 5/20, G02B 21/06, G02B 21/36, G02B 7/182, G01N 21/64, G02B 21/00

(54) **FILTER BLOCK ASSEMBLY AND OPTICAL SYSTEM USING SAME**

(30) Priority: 24.04.2023 KR 20230053148; 08.09.2023 KR 20230119953; 04.10.2023 KR 20230131678; 31.10.2023 KR 20230148390
(71) Applicant: CURIOSIS INC., Seoul 06221 (KR)
(72) Inventor: PARK, Youngho, Seoul 06221 (KR); AN, Sungeun, Seoul 06221 (KR); KIM, Bongwoo, Seoul 06221 (KR); JO, Taeyeon, Seoul 06221 (KR); CHOI, Minji, Seoul 06221 (KR); PARK, Yonghee, Seoul 06221 (KR)
(74) Representative: Viering, Jentschura & Partner mbB Patent- und Rechtsanwälte
(86) International application number: PCT/KR2024/005548
(87) International publication number: WO 2024/225754

(57) **Abstract**

The present disclosure provides a filter block assembly including a housing, a plurality of fluorescent channels and one or more bright-field channels which are incorporated in the housing, and a light source assembled to the housing to provide lighting. In the filter block assembly, a first light source is assembled to at least one of the fluorescent channels and a second light of a second light source passes through the bright-field channels. A first light of the first light source, which is irradiated onto a sample and emitted therefrom, is refracted while passing through at least one of the fluorescent channels to produce a fluorescent image of the sample. The second light of the second light source, which passes through the sample, is refracted while passing through at least one of the bright-field channels to produce a bright-field image of the sample. The fluorescent and bright-field images overlap with each other by 70% or more.

## Description

### TECHNICAL FIELD

The present disclosure relates to a filter block assembly and an optical system. Specifically, the present disclosure relates to an optical system having a bright-field image correction function. Specifically, the present disclosure relates to a sample image optical system having an improved configuration in which optical components are provided to make a refractive magnitude occurring when capturing a bright-field image equal to that occurring when capturing a fluorescent image, and an automatic shifting is performed such that the bright-field image overlaps substantially with the fluorescent image to obtain a clearer image.

Further, the present disclosure relates to a filter block in which a plurality of fluorescent filters is applied to one housing to provide a fluorescent and bright-field image correction function, an automatic position adjustment function, and the like.

Further, the present disclosure relates to a filter block assembly in which a beam splitter (for example, a dichroic mirror) is inserted into a side insertion port or withdrawn therefrom, thereby easily replacing the beam splitter with a new one, and an optical system using the same.

### BACKGROUND

A fluorescent optical system, which is an optical system for observing an object with fluorescent obtained by irradiating light of various wavelengths from a light source onto a sample, is mainly used in a case in which the sample itself emits the fluorescent, or a case in which a fluorescent substance may be adsorbed onto the sample. For example, the fluorescent optical system may be used to label a specific cell with a fluorescent dye, a fluorescent antibody, or the like, and study an intracellular structure of the specific cell and a function thereof.

In this case, the fluorescent optical system may include a light source and a plurality of filters corresponding to wavelengths which coincide with the fluorescent dye. For example, the fluorescent optical system may include an excitation filter configured to select an excitation wavelength of light emitting from the light source, a dichroic beam splitter configured to split a beam to irradiate the light passing through the excitation filter onto a sample, and an emission filter. The emission filter blocks unwanted traces (noises) out of excitation light refracted in response to the fluorescent of the sample and allows only the excitation light in a narrow wavelength band around a maximum fluorophore emission wavelength to pass therethrough, so that only a desired fluorescent of the sample reaches a detector.

Mercury and xenon arc types of lamps have been mainly used as the light source. In recent years, a low-cost and precision solid-state light source, for example, a light emitting diode (LED) has been used as an alternative to the xenon arc type of lamp.

In recent years, in the fluorescent optical system, a fluorescent channel is used to observe various wavelengths. In this case, the fluorescent optical system mainly has a configuration in which a light source and a fluorescent filter block are separately provided. In this configuration, three fluorescent parts such as an excitation filter, a beam splitter, and an emission filter are coupled to one block, and the light source is arranged separately. In this case, a structure in which a plurality of blocks is coupled to a rotating turret may be provided. In such a structure, a volume of the light source provided separately outside the fluorescent optical system is large, and a size of the filter block is large due to a turret-type multi-channel. This may increase the entire volume of an equipment, which makes it difficult to reduce the size of the equipment.

In addition, a variety of efforts have been made to miniaturize a multi-channel fluorescent light source system. In recent years, a structure has been employed in which three fluorescent sets and a light source are coupled to each block, and each block is placed on a turret to be replaced with a new one in a rotatable manner. In this case, a plurality of housings in each of which the three fluorescent sets and the light source are integrated as a unit may be provided. This increases a relative size of the housings. As a result, there is a limit in reducing the size of the system. In addition, in such a turret-type rotatable manner, a joint for connection with a circuit board inside a receptacle for each block needs to be provided to supply power to the light source. This complicates the structure of the system. A contact defect may occur due to foreign substances during rotation contact. In this case, lighting based on the light source may be defective, which may cause a matter that the observation is impossible. Further, due to the reduction in size of the filter block assembly, the filter block assembly needs to be disassembled to replace the dichroic beam splitter or the like with a new one. This may make the replacement difficult. Therefore, it is necessary to develop a filter block assembly which may be effectively used in a fluorescent microscope and configured such that a component such as the downsized dichroic beam splitter or the like may be replaced with a new one in a simple manner.

In addition, the bright-field optical system is an optical system which enlarges and illuminates a sample using a visible ray and an objective lens. In the bright-field optical system, the sample is illuminated from below and appears brightly with respect to a dark background.

The bright-field optical system has a relatively simplified structure and is inexpensive, and therefore is mainly used to observe cells, tissues, and other biological samples in research, education, and other fields, specifically, a biological and medical field.

In observing a cell, a tissue, or the like, specifically, a live cell, an image of a shape of the cell or tissue is captured by a bright-field microscopy, and a fluorescent image is additionally captured by a fluorescent microscopy through switching of a mode of the microscopy, including a light source and an optical filter. Thereafter, the captured fluorescent image and the captured bright-field image are overlapped each other.

However, when each capturing is performed, an image shift may occur due to light refraction by a filter. As a result, two images may not be matched with each other so that they are not clear and appear blurry. This makes it difficult to obtain a precise image.

As a method to solve such matters, there is a method of comparing two captured images and processing them in a software manner based on a refracted and shifted magnitude to match the images with each other. This method may process the images at a low cost and may exhibit a significant difference in performance for an algorithm of each software. Further, an edge of the image without information corresponding to the shifted magnitude needs to be cut, which may reduce the size of the entire image.

As another method, there is a method of moving a stage in X- and Y-axis directions when capturing a bright-field image by a refractive magnitude caused when capturing a fluorescent image, and matching the images with each other. However, this method is manually operated, which results in a degradation in accuracy. In addition, this method may exhibit a significant difference in performance depending on a resolution, speed and the like. Because of this, the method also has a limitation.

The present disclosure was made to solve the above-mentioned matters relating to the fluorescent optical system and the bright-field optical system, and the present disclosure is for the purpose of providing a filter block assembly, and an optical system including the same.

### SUMMARY

The present disclosure provides a filter block assembly having an improved configuration in which a plurality of fluorescent filter sets is applied to one housing without using a carriage in a fluorescent optical system, a light source is integrated with the housing to form one body so that a reduction in size of the system is achieved and the optical system is precisely implemented in a smooth manner without causing a defect in power supply, and optical components are provided to make a refractive magnitude occurring when capturing a bright-field image equal to that occurring when capturing a fluorescent image, and an automatic correction is performed to prevent occurrence of an image shifting and obtain a clearer image, and an image optical system including the same. In this case, the filter block assembly may be configured to be automatically operated by a power source and may have an improved automatic position adjustment function of rapidly performing an accurate alignment operation.

Further, the present disclosure provides a filter block assembly configured such that a component such as a beam splitter (for example, a dichroic beam splitter), a filter, or the like, may be replaced with a new one in a simple manner and a size thereof may be reduced.

An example embodiment of the present disclosure provides a filter block assembly and a sample image optical system using the same.

The sample image optical system according to an example embodiment of the present disclosure may include a fluorescent channel provided with a first light source to produce a fluorescent image, and a bright-field channel provided with a second light source to produce a bright-field image. In an example embodiment, a first light of the first light source, which is irradiated onto a sample and emitted from the sample, is refracted while passing through the fluorescent channel to produce the fluorescent image of the sample. A second light of the second light source, which passes through the sample, is refracted while passing through the bright-field channel to produce the bright-field image of the sample. The fluorescent image and the bright-field image may overlap with each other by 70% or more. Preferably, the fluorescent image and the bright-field image may overlap with each other by about 80% or more, specifically about 90% or more, more specifically 100%.

In an aspect, the present disclosure provides a fluorescent filter block assembly includes one housing, two or more fluorescent filter sets incorporated in the housing, and a light source assembled to the housing to provide lighting.

A filter block assembly according to another example embodiment of the present disclosure may include a housing, a plurality of fluorescent channels and one or more bright-field channels which are incorporated in the housing, and a light source assembled to the housing to provide lighting. A first light source may be assembled to at least one of the plurality of fluorescent channels and a second light of a second light source passes through the one or more bright-field channels. A first light of the first light source, which is irradiated onto a sample and emitted therefrom, may be refracted while passing through at least one of the plurality of fluorescent channels to produce a fluorescent image of the sample. The second light of the second light source, which passes through the sample, may be refracted while passing through at least one of the one or more bright-field channels to produce a bright-field image of the sample. The fluorescent and bright-field images may overlap with each other by 70% or more. Preferably, the fluorescent image and the bright-field image may overlap with each other by about 80% or more, specifically by about 90% or more, more specifically by 100%.

In an aspect, light sources may be assembled to the plurality of fluorescent channels, respectively. In a case in which two fluorescent channels are provided, a first light source may be assembled to a first fluorescent channel, and a second light source different from the first light source may be assembled to a second fluorescent channel.

In an aspect, the filter block assembly may further include one or more bright-field channels which are incorporated in the housing. That is, a plurality of bright-field channels may be provided.

In an aspect, the filter block assembly may be configured to use no carriage.

In an aspect, the bright-field channel may include one or more windows configured such that a second light of the second light source, which passes through the sample, may be refracted while passing through the bright-field channel.

In an aspect, each of the one or more windows may be made of a transparent material.

In an aspect, each of the one or more windows may be made of glass or acrylic.

In an aspect, light sources may be assembled to each of the plurality of fluorescent channels, respectively.

In an aspect, the filter block assembly may further include one or more bright-field channels, which are incorporated in the housing.

In an aspect, the first fluorescent channel to which the first light source is assembled may include a dichroic beam splitter and an emission filter. A first light of the first light source, which is irradiated onto the sample and emitted from the sample, may be refracted while passing through the dichroic beam splitter and the emission filter to produce the fluorescent image.

In an aspect, the bright-field channel may include a first window and a second window. A second light of the second light source, which has been passed through the sample, may be refracted while passing through the first window and the second window to produce the bright-field image.

In an aspect, the first fluorescent channel to which the first light source is assembled may include a dichroic beam splitter and an emission filter. A first light of the first light source, which is irradiated onto the sample and emitted from the sample, may be refracted while passing through the dichroic beam splitter and the emission filter to produce the fluorescent image. The bright-field channel may include a first window and a second window. A second light of the second light source, which passes through the sample, may be refracted while passing through the first window and the second window to produce the bright-field image.

In an aspect, the first window may be arranged at a position corresponding to the dichroic beam splitter, and the second window may be arranged at a position corresponding to the emission filter.

In an aspect, at least one of a thickness, a material, and an angle of each of the first window and the second window may be set such that the fluorescent image and the bright-field image overlap with each other by 70% or more. Preferably, the fluorescent image and the bright-field image may overlap with each other by about 80% or more, specifically by about 90% or more, more specifically by 100%.

In an aspect, among the plurality of fluorescent channels, the first fluorescent channel to which the first light source is assembled may include three fluorescent parts composed of an excitation filter, the dichroic beam splitter and the emission filter.

In an aspect, the excitation filter, the dichroic beam splitter and the emission filter as the three fluorescent parts may be arranged sequentially from the first light source.

In an aspect, the three fluorescent parts may be formed in a circular, polygonal, star, or elliptical shape.

In an aspect, the light source is fixed to a light module, and the light module may be assembled to one side of each fluorescent channel of the housing.

In an aspect, at least one or more focusing lenses may further be provided between the first light source and the fluorescent part.

In an aspect, the plurality of fluorescent filters may be arranged in a linear, curved, or circular shape.

In an aspect, the housing may include a driver. The driver may be configured to automatically adjust positions of the plurality of fluorescent channels.

In an aspect, the driver may include a power source fixed to the housing, and a guide configured to control and guide an operation of the power source.

In an aspect, the power source may be a drive motor, a linear motor, a piezoelectric motor, a solenoid actuator, or a voice coil.

In an aspect, the guide may be a sliding guide for linear movement.

In an aspect, the power source may be the drive motor, a pinion may be fixed to the drive motor, and teeth of the pinion may be engaged with teeth of a rack.

In an aspect, the power source may be the drive motor, a ball screw or a lead screw may be fixed to the drive motor, and teeth of the screw may be engaged with teeth of a nut.

In an aspect, the power source may be the linear motor, and the linear motor may be fitted into a magnet track.

In an aspect, the housing may further include a sensor configured to detect a position of the housing.

In an aspect, the sensor may include one or more selected from the group consisting of a linear encoder, a circular encoder, and a limiter switch.

A filter block assembly according to another example embodiment of the present disclosure may include: a housing; a channel portion incorporated in the housing and including a first fluorescent channel, a second fluorescent channel, and a bright-field channel; a (1-1)st light source assembled to the first fluorescent channel to provide lighting to the first fluorescent channel; and a (1-2)nd light source assembled to the second fluorescent channel to provide lighting to the second fluorescent channel. In this case, the (1-1)st light source may be assembled to the first fluorescent channel to provide the lighting to the first fluorescent channel, the (1-2)nd light source may be assembled to the second fluorescent channel to provide the lighting to the second fluorescent channel, and light emitted from the second light source may pass through the bright-field channel.

In another example embodiment, a sample image optical system may include: a first fluorescent channel provided with a (1-1)st light source; a second fluorescent channel provided with a (1-2)nd light source; and a bright-field channel provided with a second light source. Light of the (1-1)st light source, which is irradiated onto a sample and emitted from the sample, may be refracted while passing through the first fluorescent channel to generate a first fluorescent image of the sample. Light of the (1-2)nd light source, which is irradiated onto the sample and emitted from the sample, may be refracted while passing through the second fluorescent channel to generate a second fluorescent image of the sample. Light of the second light source, which passes through the sample, may be refracted while passing through the bright-field channel to generate a bright-field image of the sample. The first fluorescent image and the bright-field image may overlap with each other by about 70% or more, and/or the second fluorescent image and the bright-field image may overlap with each other by about 70% or more. Preferably, the first or second fluorescent image and the bright-field image may overlap with each other by about 80% or more, specifically about 90% or more, more specifically 100%.

In an aspect, the first fluorescent image and the second fluorescent image may overlap with each other by about 70% or more, specifically about 80% or more, more specifically about 90% or more, more specifically 100%.

In an aspect, the first fluorescent image, the second fluorescent image, the bright-field image may overlap with each other by about 50% or more at minimum, specifically about 60% or more, more specifically about 70% or more, more preferably about 80% or more, more specifically about 90% or more, even more specifically 100%.

In a specific example, in the filter block assembly, the channel portion incorporated in the housing may be configured to be arranged in the order of the first fluorescent channel, the bright-field channel, and the second fluorescent channel, or the order of the first fluorescent channel, the second fluorescent channel, and the bright-field channel.

In a specific example, the housing may include a driver. The driver may be arranged between the first fluorescent channel and the second fluorescent channel and may be configured to automatically adjust positions of the fluorescent channels. The driver may include a power source fixed to the housing, and a guide for controlling and guiding an operation of the power source.

In a specific example, the bright-field channel may be arranged between the first fluorescent channel and the second fluorescent channel, and the driver may be assembled to one side of the bright-field channel.

In a specific example, the driver may include a power source fixed to the housing, and a guide for controlling and guiding an operation of the power source.

In an aspect, the bright-field channel, which is used together with the fluorescent channel provided with a first light source, may include a second light source. Light of the first light source, which is irradiated onto a sample and emitted from the sample, may be refracted while passing through the fluorescent channel to generate a fluorescent image of the sample. Light of the first light source, which passes through the sample, may be refracted while passing through the bright-field channel to generate a bright-field image of the sample. The fluorescent image and the bright-field image may overlap with each other by 70% or more.

According to another example embodiment of the present disclosure, a filter block assembly may include: a housing; a side insertion port formed in a side surface of the housing at a certain angle with a bottom surface of the housing; a reference surface formed inward of the side insertion port; a support surface formed inward of the side insertion port to face the reference surface; and a cover configured to open and close the side insertion port. A beam splitter may be inserted into the side insertion port or may be replaced with a new one via the side insertion port.

In an aspect, an elastic body may be inserted into the side insertion port together with the beam splitter.

In an aspect, the elastic body may include a plate spring.

In an aspect, the beam splitter may be brought into close contact with the reference surface by the elastic body.

In an aspect, the filter block assembly may include at least one of a bright-field channel or a fluorescent channel. For example, the filter block assembly may include the bright-field channel or the fluorescent channel. In an aspect, in the case in which the filter block assembly includes the fluorescent channel, the present disclosure may provide the fluorescent channel including: the housing; the side insertion port formed in the side surface of the housing at the certain angle with the bottom surface of the housing; the reference surface formed inward of the side insertion port; the support surface formed inward of the side insertion port to face the reference surface; and the cover configured to open and close the side insertion port. The beam splitter may be inserted into the side insertion port or may be replaced with a new one via the side insertion port.

In an aspect, the beam splitter may be a dichroic beam splitter.

In an aspect, the reference surface may be formed such that the dichroic beam splitter is arranged at an angle of 45 degrees ±1.5 degrees with respect to at least one of an excitation filter or an emission filter.

In an aspect, the housing may include: a first opening in which the emission filter is mounted; a second opening in which the excitation filter is mounted; an excitation-filter coupling portion formed in a threaded shape in a surface of the first opening, which is exposed outward of the filter block assembly; and an emission-filter coupling portion formed in a threaded shape in a surface of the second opening, which is exposed outward of the filter block assembly. A surface in which the first opening is formed, a surface in which the second opening is formed, and the side surface of the housing may be adjacent to each other.

In an aspect, the filter block assembly may further include at least one of an insertion port into which the excitation filter is inserted or through which the excitation filter is replaced with a new one, and an insertion port into which the emission filter is inserted or through which the emission filter is replaced with a new one.

In an aspect, the filter block assembly may include the excitation filter, the dichroic beam splitter inserted into the side insertion port, and the emission filter. Light of the light source, which is irradiated onto the sample and light emitted from the sample, may be refracted while passing through the dichroic beam splitter and the emission filter to generate a fluorescent image.

In an aspect, the filter block assembly may include a plurality of fluorescent channels and one or more bright-field channels. The side insertion port, the reference surface, the support surface, and the cover may be provided in each of the plurality of fluorescent channels.

A sample image optical system according to another example embodiment of the present disclosure may include an objective lens, a receptacle arranged above the objective lens; a filter block assembly arranged within the receptacle, and an eye lens arranged above the fluorescent filter block assembly.

According to an example embodiment of the present disclosure, a plurality of fluorescent filters and light sources are integrally provided in one housing. This makes it possible to reduce the entire size of an optical system and a manufacturing cost thereof. The optical system may be used suitably for a multi-channel fluorescent microscopy.

According to an example embodiment of the present disclosure, the optical system may be configured to slide linearly. This eliminates a need to additionally provide a plate for fixing a housing and a carriage, which makes it possible to simplify a structure of the optical system and reduce the number of parts or components.

According to an example embodiment of the present disclosure, a configuration of a power supply is simple and clear, which makes it possible to suppress the occurrence of measurement failure.

According to an example embodiment of the present disclosure, a light source such as LED is used, which suppresses the generation of heat and achieves energy savings. Further, the optical system may be used suitably for a live cell imaging (LCI) microscopy.

According to an example embodiment of the present disclosure, the optical system has a structure not divided into individual blocks. This makes it possible to stably implement an optical alignment and coupling compared to such a division type.

According to an example embodiment of the present disclosure, it is possible to move the filter block at an accurate position by electronic control.

According to an example embodiment of the present disclosure, it is possible to automatically move the filter block according to a sequence set in advance by a user.

According to an example embodiment of the present disclosure, a final refractive magnitude in a fluorescent light path and a final refractive magnitude in a bright-field light path substantially coincide with each other. Thus, no shifting occurs between two images, which makes it possible to eliminate a need for additional correction or compensation.

According to an example embodiment of the present disclosure, it is possible to additionally use fluorescent channels of various colors regardless of shifting of a bright-field image.

According to an example embodiment of the present disclosure, it is more economical than using a fluorescent filter block specially designed so as not to occur refraction in the fluorescent light path.

According to an example embodiment of the present disclosure, there is no need to minimize image processing to compensate for the shifting or to physically move a stage, which makes it possible to more quickly obtain results.

According to an example embodiment of the present disclosure, it is possible to replace a beam splitter (for example, a dichroic beam splitter) with a new one in a simple manner.

According to an example embodiment of the present disclosure, the filter blocks are integrally configured without being divided into individual blocks, and each light module is assembled to one side of each fluorescent filter set of the housing. This makes it possible to align a light path between a light source and an objective lens, which increases light efficiency and reduces a light usage time, thus ultimately suppressing the occurrence of condensation.

### BRIEF DESCRIPTION OF THE DRAWINGS

FIG. 1 is an explanatory view of a filter block assembly according to an example embodiment of the present disclosure.
FIG. 2 is a cross-sectional view taken along line A-A in FIG. 1.
FIG. 3 is an exemplary exploded view of a fluorescent filter set and a light source which constitute the filter block assembly according to an example embodiment of the present disclosure.
FIGS. 4 to 6 are explanatory views of the filter block assembly according to an example embodiment of the present disclosure, when viewed at different angles.
FIG. 7 is an explanatory view illustrating another example of the filter block assembly according to an example embodiment of the present disclosure.
FIG. 8 is an explanatory view illustrating an internal structure of a fluorescent channel according to an example embodiment of the present disclosure.
FIG. 9 is a schematic view illustrating a light refraction example by the fluorescent channel in FIG. 8.
FIG. 10 is an explanatory view illustrating an internal structure of a bright-field channel according to an example embodiment of the present disclosure.
FIG. 11 is a schematic view for explaining a light refraction example by a bright-field filter block in FIG. 10.
FIG. 12 is an explanatory view illustrating a state in which a fluorescent image of a sample and a bright-field image of a sample do not overlap with each other, according to an example embodiment of the present disclosure.
FIG. 13 is an explanatory view illustrating a state in which the fluorescent image of the sample and the bright-field image of the sample overlap with each other by 100%, according to an example embodiment of the present disclosure.
FIG. 14 is an explanatory view illustrating a case in which the fluorescent image of the sample and the bright-field image of the sample overlap with each other in a range of more than 0% to less than 100%, according to an example embodiment of the present disclosure.
FIG. 15 is an explanatory view illustrating a side insertion port formed in the filter block assembly, which is integrated with a light source, according to an example embodiment of the present disclosure.
FIG. 16A is an explanatory cross-sectional view of the filter block assembly having the side insertion port according to an example embodiment of the present disclosure.
FIG. 16B is an explanatory view illustrating a case in which a dichroic beam splitter is inserted into the side insertion port of the filter block assembly according to an example embodiment of the present disclosure.

### DETAILED DESCRIPTION

In order to clarify the technical sprit of the present disclosure, example embodiments of the present disclosure will be described in detail with reference to the accompanying drawings. Detailed description of the present disclosure will be omitted in the case where it is determined that detailed description of related known configurations or functions in describing the embodiments of the present disclosure prevents understanding of the embodiments of the present disclosure. In each drawing, components having substantially identical functions and configurations will be designated by like reference numerals or symbols as possible even if they are displayed on other drawings. For the sake of convenience in description, an apparatus and a method will be described together if needed. Each operation in the present disclosure may not necessarily be performed in the order described herein, but may be performed in parallel, selective, or individual manner.

Terms used in example embodiments are general terms that are currently widely used while their respective functions in the present disclosure are taken into consideration. However, the terms may be changed depending on the intention of one of ordinary skilled in the art, legal precedents, emergence of new technologies, and the like. Also, in specific cases, terms that are arbitrarily selected by the applicant of the present disclosure may be used. In this case, the meanings of these terms may be described in detail in the corresponding disclosure. Accordingly, the terms used herein should be defined based on the meanings thereof and the content throughout the specification, rather than a simple name of the term.

Expressions in the singular form should be understood to encompass expressions in the plural form unless the context clearly indicates otherwise. The term "includes", "has" or the like are intended to include features, numeric characters, operations, operations, constituent elements, parts, or a combination thereof, and should be understood not to exclude one or more other features, numeric characters, operations, operations, constituent elements, parts, or a combination thereof, or additional features and the like. That is, when a part "comprise or includes" a constituent element through the specification, this means that the part may further include other constituent elements, rather than excluding other constituent elements, unless other stated.

The expression such as "at least one" encompass the entire list of components and does not individually represent respective constituent elements in the list. For example, the expression "at least one of A, B, and C" may include the following meanings: "A alone", "B alone", "C alone", "both A and B together", "both A and C together", "both Band C together", or "all three of A, B, and C together".

In addition, the terms such as "---part," "module" and the like used herein may refer to a unit that performs at least one function or operation, which may be realized as hardware or software, or may be realized as a combination of hardware and software.

Further, when one constituent element is referred to as being "connected" to another constituent element, the one constituent element may be "directly connected" to another constituent element, or may be "indirectly connected" or "electrically connected" to another constituent element by intervening yet another constituent element therebetween. Further, when a part "comprise or includes" a constituent element through the specification, this means that the part may further include other constituent elements, rather than excluding other constituent elements, unless other stated.

The expression "configured (or set) to---" described herein may be alternatively expressed to, for example, "suitable for---," "having the capacity to---," "designed to---," "adapted to---," "made to---," "capable of---," or the like depending on situations. The expression "configured (or set) to---" may not necessarily mean only "specifically designed to---" in hardware. Alternatively, in some circumstances, the expression "system configured to---" may mean that the system is "capable of---" together with other apparatus(es) or constituent element(s). The phrase "processor configured (or set) to perform A, Band C" may mean, for example, a dedicated processor (for example, embedded process) configured to perform a respective operation, or a generic-purpose processor (for example, a central processing unit (CPU) or an application processor) capable of performing respective operations by executing one or more software programs stored in a memory.

Further, although the terms including ordinal numbers such as a first, a second and the like used herein may be used to describe various constituent elements, such constituent elements should not be limited by terms including the ordinal numbers. The above terms may be used to distinguish a constituent element from another constituent element. For example, a first constituent element may be named as a second constituent element in another description of the specification without departing from the scope of the present disclosure. Conversely, the second constituent element may be named as the first constituent element in another description of the specification. The term "and/or" may be used to represent a combination of a plurality of related items described herein or at least one of the plurality of related items.

Further, the term "about" used herein should be understood to include a range of 10% or less, specifically 5% or less, more specifically 1 % or less of a given value or range.

An example embodiment of the present disclosure provides a filter block assembly in which a filter set is provided in one block, a part such as a beam splitter (for example, a dichroic beam splitter) may be replaced with a new one without an operation of additionally dividing the filter block. Further, an example embodiment of the present disclosure may be applied to replace another filter other than the dichroic beam splitter with a new one without the operation of additionally dividing the filter block.

As used herein, the phrase "filter block assembly" means including one or more filter sets or channels which may be used in a sample image optical system. In an example embodiment, the filter block assembly of the present disclosure may refer to a bright-field channel or a fluorescent channel. In another example embodiment, the filter block assembly of the present disclosure may include a plurality of bright-field channels and/or a plurality of fluorescent channels.

A fluorescent image optical system such as a fluorescent microscope according to an example embodiment of the present disclosure requires at least two or more fluorescent channels to measure two or more wavelength bands. The fluorescent image optical system condenses light of a specific wavelength band from a light source by an objective lens to excite a fluorescent substance labeled on a cell, and collects light of a wavelength emitted therefrom by an image sensor. In this case, when a light path is misaligned, an image collection itself may be difficult or a severe degradation in quality may occur.

Thus, according to an example embodiment of the present disclosure, a plurality of fluorescent channels and light sources are integrated with each other to be coupled to one housing, thereby achieving a reduction in size and a simple optical alignment, and ensuring high accuracy and precision.

Further, the filter block according to an example embodiment of the present disclosure has a configuration in the filter blocks are not provided individually. There is no need to provide a plate or a carriage which is essential in in the related art. In particular, the connection of a lead line for power supply is simple and easy, which eliminates a need to design a complex contact-point connection structure for connection to an existing circuit board. Thus, the structure may be simplified and optimized for miniaturization.

Further, the sample image optical system according to an example embodiment of the present disclosure, which has a function of correcting shifting of the bright-field image, may capture an image of a shape of a sample by a bright-field microscopy, and overlap (superimpose) the captured fluorescent image and the captured bright-field image each other through switching of a mode of the microscopy, including a light source and an optical filter, thus obtaining an image of the sample.

In this case, three fluorescent channel for capturing the fluorescent image condenses light of a specific wavelength band from a light source by an objective lens to excite a fluorescent substance labeled on the sample, and collects light of a wavelength emitted therefrom by an image sensor. In this case, when a light path is misaligned, an image collection itself may be difficult or a severe degradation in quality may occur. Thus, caution is needed. In an example embodiment, the optical system may include a plurality of, for example, two, three, four or more fluorescent channels.

Further, the bright-field channel for capturing the bright-field image is an optical system which enlarges and illuminates a sample using a visible ray and an objective lens. In the bright-field channel, the sample is illuminated from below and appears brightly with respect to a dark background. Thus, an image of the sample may be obtained. In this regard, the expression "the bright-field channel includes the light source" used herein may be interpreted to include not only a case in which the light source is assembled directly to the bright-field channel but also a case in which light of the light source is illuminated to and passed through the bright-field channel.

Further, in an example embodiment of the present disclosure, optical components may be provided to make a refractive magnitude occurring when capturing the bright-field image equal to that occurring when capturing the fluorescent image, and an automatic correction may be performed to prevent occurrence of an image shifting so that the bright-field image and the fluorescent image overlap substantially with each other to obtain a clearer image. In this regard, the expression "substantially overlap" used herein means that the bright-field image and the fluorescent image overlap with each other to check an image of a target sample, and means that they overlap with each other by about 50% or more, about 60% or more, or about 70% or more. Preferably, the bright-field image and the fluorescent image may overlap with each other by about 80% or more, specifically about 90% or more, more specifically 100%.

Throughout the present disclosure, the fluorescent channel and the bright-field channel may be referred to as concepts including a fluorescent filter and a bright-field filter, respectively.

As used herein, the term "sample" may be used interchangeably with a "specimen" and may include all well-known things, which may be observed by an optical microscope or a light microscope. For example, the "sample" may include cells or tissues (for example, animal, plant, mold, protozoa, cell or tissue of bacteria, and the like, including all common or pathology cell/tissue), cell components (for example, nucleus, cytoplasm, chloroplast, mitochondria, and the like), microbes (for example, bacteria, protozoa, some avian, and mold, and the like), organoids, and the like, but is not limited thereto.

The sample image optical system according to an example embodiment of the present disclosure, which has a function of correcting an image shifting between a fluorescent image and a bright-field image, may include a fluorescent channel provided with a first light source to produce the fluorescent image and a bright-field channel provided with a second light source to produce the bright-field image. The phrase "the fluorescent channel provided with the first light source" used herein may include a case in which the first light source is physically assembled to the fluorescent channel, and a case in which the fluorescent channel is designed to utilize the first light source, and the like. The phrase "the bright-field channel provided with the second light source" used herein may be interpreted similarly to the above. In an example embodiment, the first light source included in the fluorescent channel may include an excitation light source configured to irradiate light for a fluorescent excitation to excite a fluorescent substance in a sample. Further, the second light source included in the bright-field channel may include a light source configured to emit light with a spectrum of a visible light range. For example, the first light source may be a laser light source or an LED-based light source, and the second light source may be a lamp configured to emit light having broad spectrum properties in the visible light region.

In an example embodiment, the fluorescent filter may be used to capture the fluorescent image, and the bright-field filter may be used to capture the bright-field image. In this case, the bright-field channel may be formed so as to correspond to the fluorescent channel. In an example embodiment, the sample image optical system may have a structure in which the channels may be interchanged.

In an example embodiment, the fluorescent channel may include an excitation filter, a dichroic beam splitter, an emission filter.

Throughout the present disclosure, the excitation filter is a part configured to transmit only a wavelength (that is, excitation wavelength) of illumination light to efficiently excite a specific fluorophore (dye) out of light emitted from the light source or a band of its surrounding narrow wavelengths.

Throughout the present disclosure, the dichroic beam splitter is a part configured to reflect and irradiate, to the sample, excitation light which passed through the excitation filter configured to transmit only a wavelength (that is, excitation wavelength) of illumination light to efficiently excite a specific fluorophore out of light emitted from a light source or a band of its surrounding narrow wavelengths.

In an example embodiment, the first light source may be used without limitation as long as it is commonly used in the fluorescent image optical system. For example, mercury, xenon, LED, and the like may be used as the first light source. Preferably, a white light, blue light, green light, and the like of the LED may be used. In this case, the type of LED may be appropriately selected depending on the type of fluorescent. For example, the blue light may be selected to observe a green fluorescent protein (GFP), the green light may be selected to observe a red fluorescent protein (RFP). The light source may be integrated with the fluorescent channel, or may be provided separately from the fluorescent channel. According to an example embodiment, in the case in which the fluorescent channel and the light source are integrated with each other to be provided in one housing, for example, in the case in which the light source is assembled to the fluorescent channel, the entire size of the optical system and a manufacturing cost thereof may be reduced. The optical system may be used suitably for a multiple-channel fluorescent microscope.

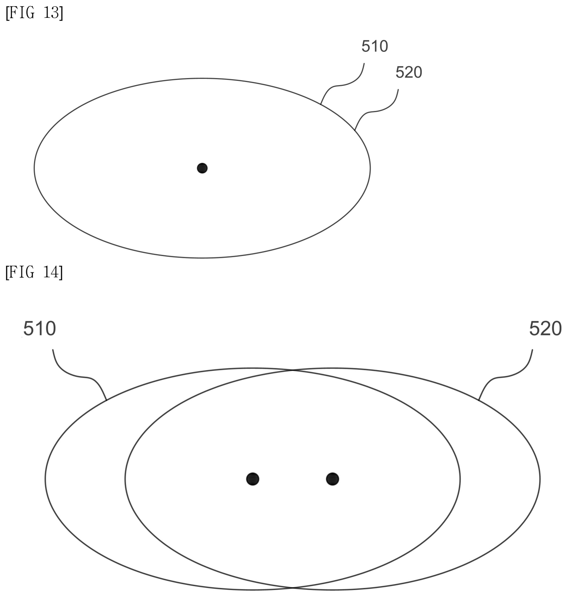

In an example embodiment, in the case in which the light source is integrated with the fluorescent channel, a plurality of fluorescent channels and light sources are coupled with each other to be provided in one housing, thereby achieving a reduction in size and a simple optical alignment, and ensuring high accuracy and precision. This will be described in more detail below with reference to FIG. 13.

Further, the emission filter is a part configured to block noises out of the excitation light and transmit only a wavelength of light emitted from the sample or a band of its surrounding narrow wavelengths such that a desired fluorescent of the sample reaches a detector. That is, molecules of the sample are electronically and vibrationally excited by incoming photons and heated to relax to be in a low vibration state. Further, the molecules of the sample emit lower energy than they absorb, that is, photons having a relatively high wavelength, and return to an electronic ground state. Fluorescent molecules absorb light of a specific wavelength and emit light of another wavelength. Thus, the sample may be identified according to its fluorescent emission spectrum based on a previously-known wavelength of incoming light.

The emission filter configured as above may be classified into a filter for an infrared region, a filter for a visible region, a filter for an ultraviolet region, a filter for a vacuum ultraviolet region, and the like.

As used herein, the term "sample" may be used interchangeably with a "specimen" and may include all well-known things, which may be observed by an optical microscope or a light microscope. For example, the "sample" may include cells or tissues (for example, animal, plant, mold, protozoa, cell or tissue of bacteria, and the like, including all common or pathology cell/tissue), cell components (for example, nucleus, cytoplasm, chloroplast, mitochondria, and the like), microbes (for example, bacteria, protozoa, some avian, and mold, and the like), organoids, and the like, but is not limited thereto.

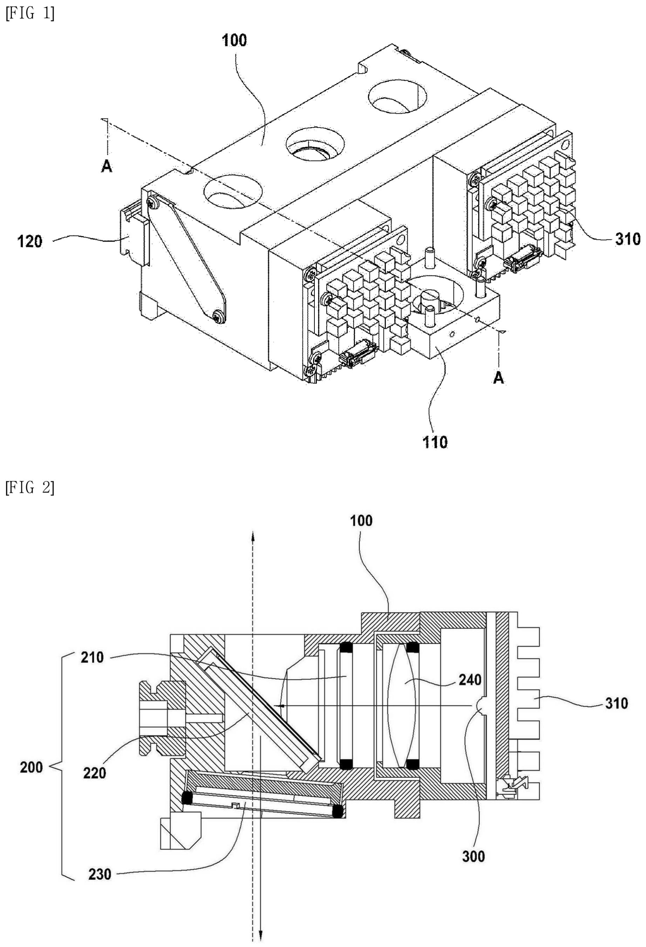

FIG. 1 is an illustration of a filter block assembly according to an example embodiment of the present disclosure, and FIG. 2 is a cross-sectional view taken along line A-A in FIG. 1.

Referring to FIGS. 1 and 2, the filter block assembly may include a housing 100, a fluorescent filter set 200 incorporated in the housing 100, a light source (for example, a first light source 300 included in a fluorescent channel) assembled to the housing 100 to provide lighting, a light module 310, a motor base 110, a sliding guide 120, a side insertion port (for example, a side insertion port 150 in FIG. 2), a side-insertion-port cover 140, and the like. The light module 310 may include a cooling pin for reducing heat of the light source. However, constituent elements of the filter block assembly are not limited to the aforementioned examples. For example, the filter block assembly may include more or fewer constituent element than the constituent elements described above. As an example, the light module 310 may include the cooling pin for reducing the heat of the light source.

In an example embodiment, the side insertion port may be formed in a side of the housing 100 at a certain angle with respect to a bottom surface of the housing 100. That is, the side insertion port may be an insertion opening formed in a side of the filter block at a certain angle with respect to a bottom surface of the filter block. In an example embodiment, the housing may have a reference surface defined inward of the side insertion port and a support surface defined to face the reference surface inward of the side insertion port. In an example embodiment, a beam splitter (for example, a dichroic beam splitter, which holds true in the following description) may be inserted into the side insertion port. Further, in addition to the beam splitter, an elastic body may be inserted into the side insertion port. In an example embodiment, examples of the elastic body may include a plate spring, a coil spring, and the like. In an example embodiment, the beam splitter inserted into the side insertion port may be brought into close contact with the reference surface by an elastic body. That is, the elastic body may press the bean splitter with respect to the reference surface such that the beam splitter is brought into close contact with the reference surface. As a result, the beam splitter may be fixed to the reference surface without deflection. Further, the beam splitter in close contact with the reference surface may define an angle of about 45 degrees with respect to another filter. To this end, the reference surface, which is a machined surface, may be formed such that the beam splitter defines the angle of about 45 degrees with respect to at least one of an excitation filter or an emission filter.

In an example embodiment, after the beam splitter is inserted into the side insertion port, the side insertion port may be hermetically sealed by the side-insertion-port cover 140 configured to open and close the side insertion port. Further, the beam splitter may be replaced with a new one by removing the side-insertion-port cover 140 and drawing out the beam splitter inserted previously into the side insertion port therefrom. For example, there may be a case in which a fluorescent channel constituted with a set for green fluorescent protein (GFP) observation is replaced with a fluorescent channel constituted with a set for red fluorescent protein (RFP) observation. In this case, a light source, an excitation filter and an emission filter adapted for the RFP observation may be replaced with new ones. Further, a type of dichroic beam splitter adapted for the RFP observation may be replaced with a new one.

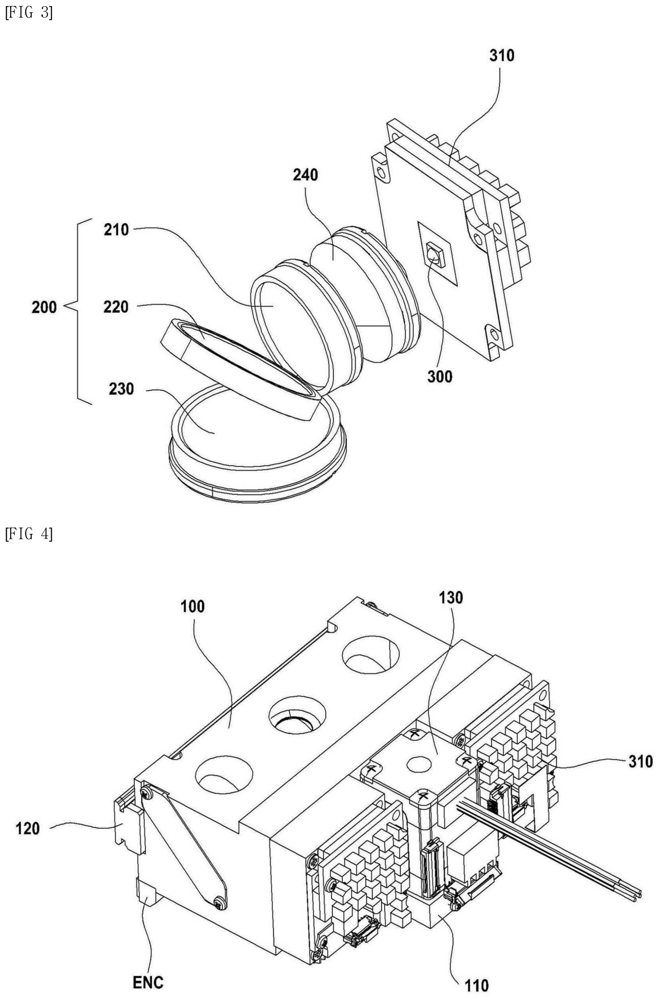

Hereinafter, the side insertion port will be described in more detail with reference to FIGS. 2 and 3.

The term "built-in" or "assembling" used herein in relation to the "housing" means that constituent elements, for example, the fluorescent channel, the light source, a bright-field channel, and the like are provided integrally in one housing without being separated from each other. However, the above-described constituent elements are merely physically integrated with each other, and may be configured to execute tacks uniquely assigned thereto or exert effects thereof independently of each other.

Accordingly, the filter block assembly according to an example embodiment of the present disclosure may not include a plate or a carriage. That is, the filter block assembly according to an example embodiment of the present disclosure may be constituted with one housing, and does not require an additional structure for receiving respective filter sets or respective filter blocks.

In an example embodiment, at least two or more fluorescent filter sets 200 may be provided to be integrated with the housing 100, thus implementing at least two or more fluorescent channels. In this regard, the term "fluorescent filter set" used herein may be used interchangeably with "fluorescent channel(s)."

In an example embodiment, the fluorescent filter set 200 may include an excitation filter 210, a dichroic beam splitter 220, an emission filter 230, and the like.

In an example embodiment, the excitation filter 210 may be configured to transmit only a wavelength (that is, excitation wavelength) of illumination light to efficiently excite a specific fluorophore out of light provided from the light source or a band of its surrounding narrow wavelengths. Further, the dichroic beam splitter 220 may be configured to reflect excitation light of the transmitted excitation wavelength and irradiate the same to a sample. The dichroic beam splitter 220 may be referred to as a dichroic mirror. In addition, the emission filter 230 may be configured to transmit only a wavelength emitted from the sample or a band of its surrounding narrow wavelengths such that a desired fluorescent of the sample reaches a detector while blocking noise of the excitation light. That is, molecules of the sample are excited electronically and vibrationally by incoming photons, heated, relaxed to be in a lower vibrational state. Further, the molecules emit photons of lower energy than that during absorption, that is, photons of a relatively high wavelength, and are returned to an electron ground state. Fluorescent molecules absorb light of a specific wavelength and emit light of other wavelengths different from the specific wavelength. Therefore, the sample may be identified by its own fluorescent emission spectrum based on a predetermined wavelength of incident light. The fluorescent filter set 200 may be constituted with the above-described three fluorescent parts. Alternatively, the fluorescent filter set 200 may be constituted with any fluorescent parts as long as they can extract light of a specific wavelength among light of various wavelengths. For example, a filter which transmits light with a constant transmittance regardless of wavelengths, a correction filter which adjusts the intensity of light in a specific wavelength range, a broadband filter, and the like may be used as the fluorescent parts. In addition, these filters may be classified into a filter for an infrared region, a filter for a visible region, a filter for an ultraviolet region, a filter for a vacuum ultraviolet region, and the like depending on frequency ranges to be used.

In an example embodiment, the first light source 300 is not particularly limited as long as it is commonly used in a fluorescent image optical system. For example, a mercury light source, a xenon light source, a light emitting diode (LED) light source, or the like may be used as the first light source 300. The first light source 300 may be provided to be integrated with the housing 100 by assembling the light module 310 to one end (for example, a fluorescent channel) of the housing 100 in a state in which the first light source 300 is fixed to the light module 310.

In an example embodiment, a focusing lens 240 may be further provided between the first light source 300 and the fluorescent filter set 200 (for example, the excitation filter 210). The focusing lens 240 may not be provided therebetween. Further, a plurality of focusing lens 240 may be provided to further enhance a focusing performance.

In an example embodiment, the filter block assembly may further include one bright-field channel. The bright-field channel may be incorporated in the housing 100. As illustrated in FIG. 1, two fluorescent filter sets 200 may be formed on both sides inside the housing 100. The bright-field channel may be formed at the center of the housing 100. In this case, a first fluorescent channel, the bright-field channel and a second fluorescent channel may be arranged in that order. As another specific example, the first fluorescent channel, the second fluorescent channel and the bright-field channel may be arranged in that order. Alternatively, three or more fluorescent channels and one or more bright-field channels may be provided. In this case, the order of arrangement of the fluorescent channels and the bright-field channels may be set as appropriate according to user's needs. A plurality of (for example, two) fluorescent channels and one bright-field channel are provided to be physically integrated inside one housing 100, but they may function independently of each other.

In an example embodiment, a plurality of fluorescent filter sets may be arranged in a linear shape, a curved shape or a circular shape. In the case in which the bright-field channel is further provided, the bright-field channel may also be arranged in conformity to the arrangement of the fluorescent filter sets.

According to an example embodiment of the present disclosure, main constituent elements are built in or assembled to one side of the housing 100. Thus, according to the configuration of the housing 100 or in some instances, the filter block assembly may be regarded as a single filter block. This makes it possible to accurately perform the alignment of light, facilitate driving and control of the filter block assembly, and reduce the size thereof.

Further, according to an example embodiment of the present disclosure, even in the single filter block (assembly) in which all of the main constituent elements are built or assembled, the beam splitter may be easily replaced with a new one via the side insertion port.

In an example embodiment, the housing 100 may be configured such that two or more fluorescent filter sets may be automatically aligned and may be automatically replaced with new ones. For example, in the case in which the plurality of fluorescent filter sets is arranged in the linear shape, the housing 100 may slide linearly to automatically align the two or more fluorescent filter sets. Further, in the case in which the plurality of fluorescent filter sets is arranged in the curved shape, the circular shape, or the like, the housing 100 may be configured such that positions of the fluorescent filter sets are automatically adjusted in conformity to a respective arrangement shape. In the case in which the bright-field channel is additionally provided, the bright-field channel may also be arranged in conformity to the arrangement of the fluorescent filter sets.

In an example embodiment, the housing 100 may be configured such that the plurality of fluorescent filter sets and one or more bright-field channels are automatically aligned and automatically replaced with new ones, respectively. To do this, the housing 100 may include a driver.

In an example embodiment, the driver may include a power source to move the plurality of fluorescent channels and/or one or more bright-field channels inside the housing 100 such that they are automatically aligned. For example, in the case in which the plurality of channels is arranged in the linear shape, the power source may linearly slide the housing 100 to automatically adjust the positions of respective channels. In this case, the power source may be configured to be fixed to the housing 100.

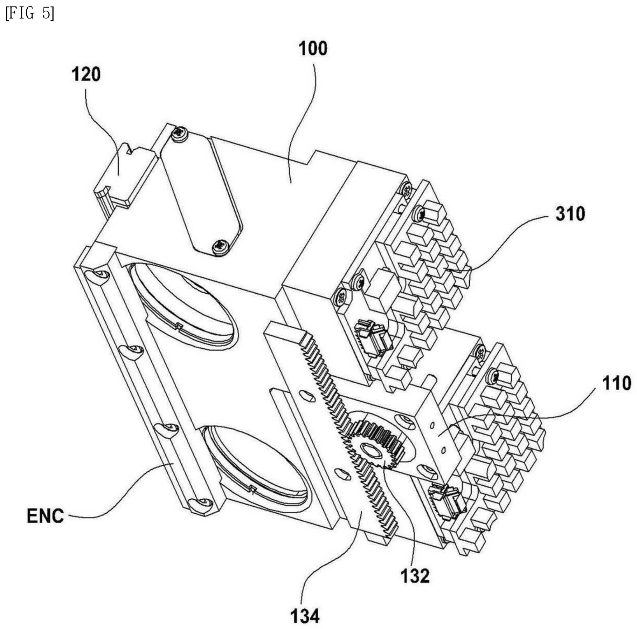

In a specific example, in a case in which the housing includes two fluorescent channels and one bright-field channel, a first fluorescent channel, a bright-field channel and a second fluorescent channel may be arranged in that order, and alternatively, the first fluorescent channel, the second fluorescent channel and the bright-field channel may be arranged in that order. In this case, the power source may be assembled to one side of the bright-field channel. In a preferred specific example, the first fluorescent channel, the bright-field channel and the second fluorescent channel may be arranged in that order in the housing. In this case, the light module 310 may be assembled to one side of each of the first fluorescent channel and the second fluorescent channel, and the power source may be assembled to one side of the bright-field channel (see FIGS. 4 to 7).

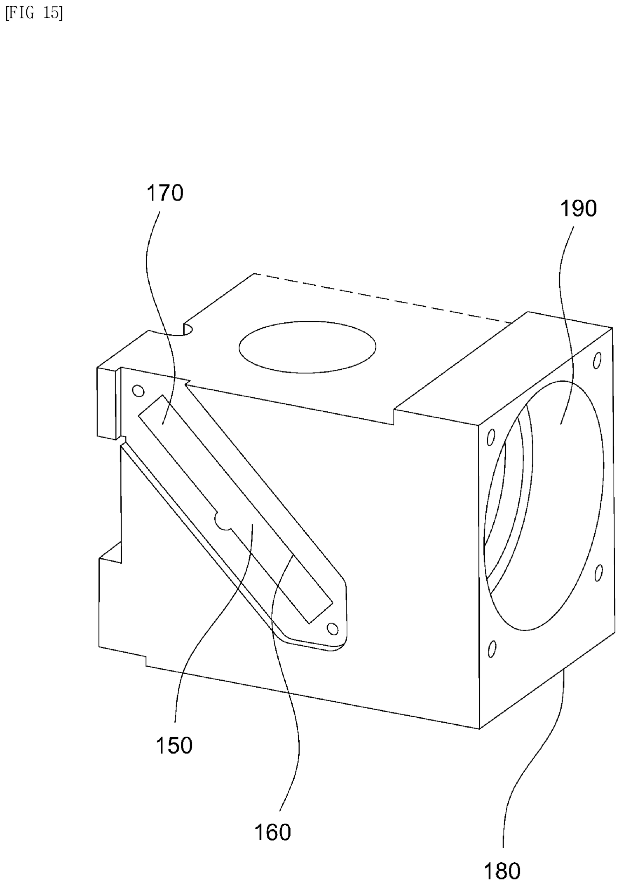

FIG. 15 illustrates an example of the side insertion port of the filter block assembly according to an example embodiment of the present disclosure. FIG. 15 illustrates an example in which the filter block assembly includes the fluorescent channel alone. The fluorescent channel illustrated in FIG. 15 may be used together with other channel(s) such as additional fluorescent channel(s) or additional bright-field channel(s). In FIG. 15, an upper surface of the filter block assembly is indicated by a dotted line.

Referring to FIG. 15, the filter block assembly may include the side insertion port 150. In an example embodiment, the side insertion port 150 may be formed in the side of the housing at a certain angle with respect to the bottom surface 180 of the housing. That is, the side insertion port 150 may be formed in the side of the filter block at the certain angle with respect to the bottom surface 180 of the filter block. With the formation of the side insertion port 150, the housing may include a reference surface 160 formed inward of the side insertion port 150 and a support surface 170 formed to face the reference surface 160 inward of the side insertion port 150. However, such a configuration is merely an example, and the reference surface 160 and the support surface 170 may be reversed in reference numeral. The reference surface may mean a surface with which the beam splitter is brought into direct close contact, and a surface which serves as a reference when the beam splitter defines a certain angle with respect to other filters (FIG. 15 illustrates the example in which the filler block assembly is constituted with the fluorescent channel(s) alone, and therefore the dichroic beam splitter may be used as a preferred example. This holds true in the following description).

In an example embodiment, the side insertion port 150 may be an insertion port into which the beam splitter is inserted. Further, in addition to the beam splitter, an elastic body may be inserted into the side insertion port 150. Examples of the elastic body may include a plate spring, a coil spring, and the like. In an example embodiment, the beam splitter inserted into the side insertion port 150 may be brought into close contact with the reference surface 160 by the elastic body. That is, the elastic body may press the bean splitter with respect to the reference surface such that the beam splitter is brought into close contact with the reference surface. As a result, the beam splitter may be fixed to the reference surface 160 without deflection. Further, the beam splitter in close contact with the reference surface 160 may define an angle of about 45 degrees with respect to another filter, for example, about 45 degrees ± 0.5 degrees, about 45 degrees ±1.0 degrees, about 45 degrees ±1.5 degrees, about 45 degrees ± 2.0 degrees, about 45 degrees ± 2.5 degrees, about 45 degrees ± 3.0 degrees, about 45 degrees ± 3.5 degrees, about 45 degrees ± 4.0 degrees, about 45 degrees ± 4.5 degrees, about 45 degrees ± 5.0 degrees, more specifically about 45 degrees ±1.5 degrees. To this end, the reference surface 160, which is a machined surface, may be formed such that the beam splitter defines the angle of about 45 degrees ±1.5 degrees with respect to other filters. For example, the reference surface 160 may be formed such that the dichroic beam splitter defines the angle of about 45 degrees ±1.5 degrees with respect to at least one of the excitation filter or the emission filter.

In another example embodiment, the reference surface 160 may be formed to define an angle of about 45 degrees with respect to at least one of paths of the light passing through the beam splitter. As used herein, the expression "light passing through the beam splitter" means excitation light, emission light, and the like required for a desired application by the user, and may include light (incident light) incident on the beam splitter, light (reflected light) reflected off the beam splitter, or light (passed light) passed through the beam splitter. These lights may also mean lights required for a desired application by the user. In a case in which the user wants to observe GFP, a blue light may be used as the light source of the fluorescent channel. In this case, the dichroic beam splitter may be arranged such that the blue light, which is incident at an angle of about 45 degrees, reflects toward the objective lens (that is, an angle between the incident light and the reflected light is 90 degrees).

In an example embodiment, after the beam splitter is inserted into the side insertion port 150, the side insertion port 150 may be hermetically sealed by the side-insertion-port cover configured to open and close the side insertion port 150. Further, the beam splitter may be replaced with a new one by removing the side-insertion-port cover and drawing out the beam splitter inserted previously into the side insertion port therefrom.

In an example embodiment, the housing may include a first opening (not illustrated) into which the emission filter is mounted and a second opening 190 into which the excitation filter is mounted. The emission filter and the excitation filter may be fixed in a planar form to a surface of the first opening, which is exposed outward of the filter block assembly, and a surface of the second opening 190, which is exposed outward of the filter block assembly, respectively. For example, the emission filter may be fixed to the filter block assembly by assembling, from the outside of the filter block assembly, the emission filter to an emission filter coupling portion formed threadedly in the surface of the first opening, which is exposed outward of the filter block assembly. Further, the excitation filter may be fixed to the filter block assembly by assembling, from the outside of the filter block assembly, the excitation filter to an excitation-filter coupling portion formed threadedly in the surface of the second opening, which is exposed outward of the filter block assembly. In an example embodiment, the side where the side insertion port 150 is formed may be adjacent to the side where the first opening is formed and the side where the second opening is formed. In this case, these sides may be adjacent to each other at a certain angle. In addition, the side where the first opening is formed, the side where the second opening is formed, and the side where the side insertion port 150 is formed may be adjacent to each other.

In another example embodiment, like the beam splitter, the excitation filter and the emission filter may also be inserted into respective insertion ports and may be replaced new ones via the respective insertion ports. That is, the filter block assembly may include the insertion port into and through which the excitation filter is inserted and replaced with the new one, the insertion port into and through which the emission filter is inserted and replaced with the new one, and the like. Even in this case, an elastic body such as a plate spring may be further inserted into the insertion ports. The example embodiment of the beam splitter may be suitably modified.

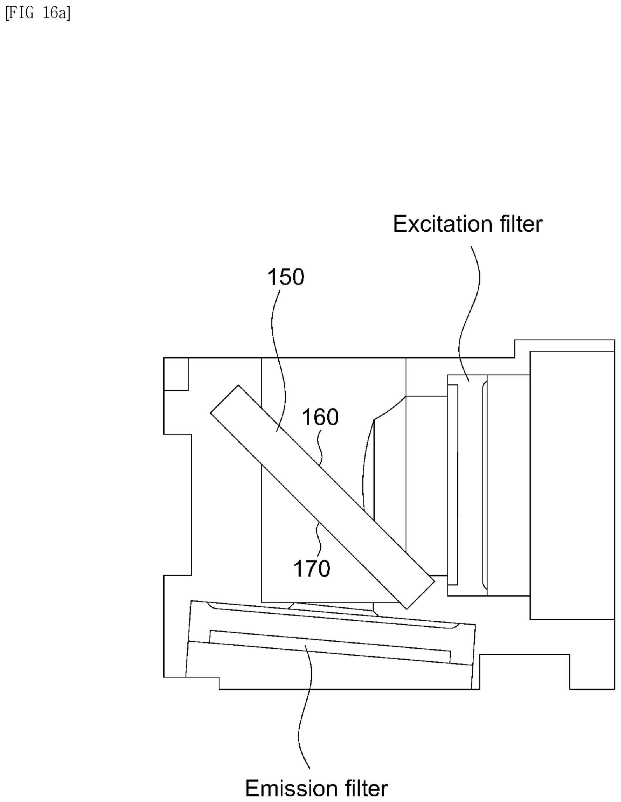

FIG. 16A is an exemplary cross-sectional view of the filter block assembly having the side insertion port according to an example embodiment of the present disclosure.

Referring to FIG. 16A, there is illustrated the filter block assembly in which the side insertion port 150 is formed between the reference surface 160 and the support surface 170. In an example embodiment, the filter block assembly may include the side insertion port 150 into which the beam splitter is inserted, the emission filter, the excitation filter, and the like. The side insertion port 150 may be a space between the reference surface 160 and the support surface 170. When the beam splitter and the elastic body are inserted into the side insertion port 150, the beam splitter may be pressed to the support surface 170 by the elastic body so that the beam splitter may be brought into close contact with the reference surface 160. In FIG. 16A, as an example, an upper surface of the side insertion port 150 is illustrated as the reference surface 160 and a lower surface thereof is illustrated as the support surface 170, but while they may be reversed according to a design.

In the related art, a deviation between products have occurred due to a clearance between assembled parts and cumulative tolerances. According to an example embodiment of the present disclosure, a reflective surface of the beam splitter may be brought into direct close contact with the reference surface provided in the filter block to eliminate the deviation between products. This makes it possible to improve the accuracy of an assembly angle of the beam splitter.

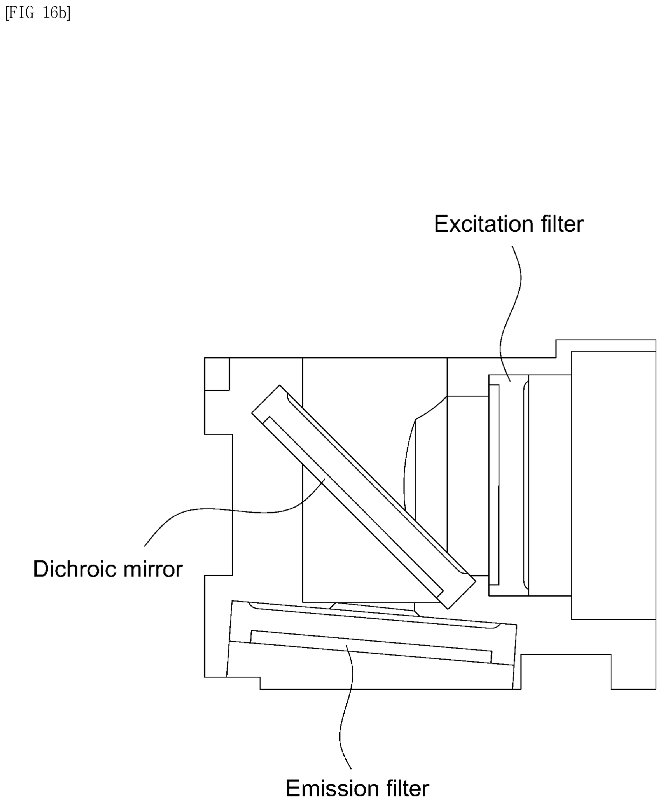

FIG. 16B is a cross-sectional view exemplarily illustrating a case in which the dichroic beam splitter is inserted into the side insertion port of the filter block assembly according to an example embodiment of the present disclosure.

Referring to FIG. 16B, the beam splitter and the elastic body are inserted into the side insertion port of the filter block assembly. Thus, the filter block assembly may include the beam splitter, the elastic body, the emission filter, the excitation filter, and the like. For example, the elastic body may include a donut-shaped plate spring configured to correspond to a frame of the beam splitter. According to an example embodiment of the present disclosure, the elastic body is brought into surface-contact with the entire frame of the beam splitter, which makes it possible to eliminate a risk that the beam splitter may break.

According to an example embodiment of the present disclosure, the beam splitter is directly fixed to the filter block. This eliminates a need to provide a separate part for fixing the beam splitter. Further, the filter block assembly may be designed using only a simple part for assisting such a fixation. For example, in the related art, a machined part and fixing screws for fixing the dichroic beam splitter are required. According to an example embodiment of the present disclosure, the elastic body and the side insertion port are used instead of such parts in the related art, which makes it possible to simplify the configuration of the filter block assembly and reduce a manufacturing cost thereof.

FIGS. 3 and 15 illustrate the example embodiment in which the filter block assembly includes the fluorescent channel alone, and the structure of the fluorescent channel included in the filter block assembly including the plurality of channels. However, the filter block assembly of the present disclosure is not limited to including the fluorescent channel alone. In an example embodiment, the filter block assembly of the present disclosure may be provided with a bright-field channel which includes the side insertion port into which the beam splitter according to the present disclosure may be inserted or which may be replaced with a new one via the side insertion port. The term "beam splitter" used herein refers to an optical component which is used to split incident light into two or more separate beams at a predetermined ratio, or which combines two or more different beams to form a single beam. A representative example thereof is the dichroic beam splitter.

FIG. 2 is a cross-sectional view taken along line A-A in FIG. 1.

Referring to FIG. 2, the fluorescent filter set 200 may include the excitation filter 210, the dichroic beam splitter 220, the emission filter 230, and the like.

In an example embodiment, the excitation filter 210, the dichroic beam splitter 220, and the emission filter 230 may be as defined above. In addition to the above-described three fluorescent parts, the fluorescent filter set 200 may be constituted with any fluorescent parts as long as they can extract light of a specific wavelength among light of various wavelengths. For example, a filter which transmits light with a constant transmittance regardless of wavelengths, a compensation filter which adjusts the intensity of light in a specific wavelength range, a broadband filter, and the like may be used as the fluorescent parts. In addition, these filters may be classified into a filter for an infrared region, a filter for a visible region, a filter for an ultraviolet region, a filter for a vacuum ultraviolet region, and the like depending on frequency ranges to be used.

In an example embodiment, the first light source 300 is not particularly limited as long as it is commonly used in a fluorescent image optical system. For example, a mercury light source, a xenon light source, a light emitting diode (LED) light source, or the like may be used as the first light source 300. The first light source 300 may be provided to be integrated with the housing 100 by assembling the light module 310 to one end (for example, a fluorescent channel) of the housing 100 in a state in which the first light source 300 is fixed to the light module 310.

In an example embodiment, the focusing lens 240 may be further provided between the first light source 300 and the fluorescent filter set 200 (for example, the excitation filter 210). The focusing lens 240 may not be provided therebetween. Further, the plurality of focusing lens 240 may be provided to further enhance a focusing performance.

In an example embodiment, the dichroic beam splitter 220 may be inserted into the side of the filter block. In the related art, in order to replace the dichroic beam splitter 220 with a new one, the filter block needs to be separated from an equipment for disassembly. In contrast, according to an example embodiment of the present disclosure, since the dichroic beam splitter 220 is inserted into the side of the filter block, even in the state in which the filter block is assembled to the equipment, it is possible to easily replace the dichroic beam splitter with a new one as long as the side is exposed.

FIG. 3 is an exemplary exploded view of the fluorescent filter set and the light source which constitute the filter block assembly according to an example embodiment of the present disclosure.

Referring to FIG. 3, the fluorescent filter set 200 may include the excitation filter 210, the dichroic beam splitter 220 and the emission filter 230 as three fluorescent parts which are arranged sequentially with reference to the first light source 300. Further, the three fluorescent parts included in the fluorescent filter set 200 may be formed in various shapes, such as a circular shape, a polygonal shape, a star shape, an elliptical shape and the like.

FIGS. 4 to 6 are illustrative diagrams of the filter block assembly according to an example embodiment of the present disclosure, when viewed at different angles.

Referring to FIGS. 4 to 6, the light module 310 may be assembled to one side of each of the first fluorescent channel and the second fluorescent channel, and the power source may be assembled to one side of the bright-field channel. The power source is not particularly limited as long as it may be attached to the housing 100 to move devices or parts. Examples of the power source may include a drive motor (rotary motor), a linear motor, a piezoelectric motor based on a piezo effect, an ultrasonic motor using ultrasonic waves, a solenoid actuator using an electromagnet force, other types of voice coils using the electromagnet force, and the like.

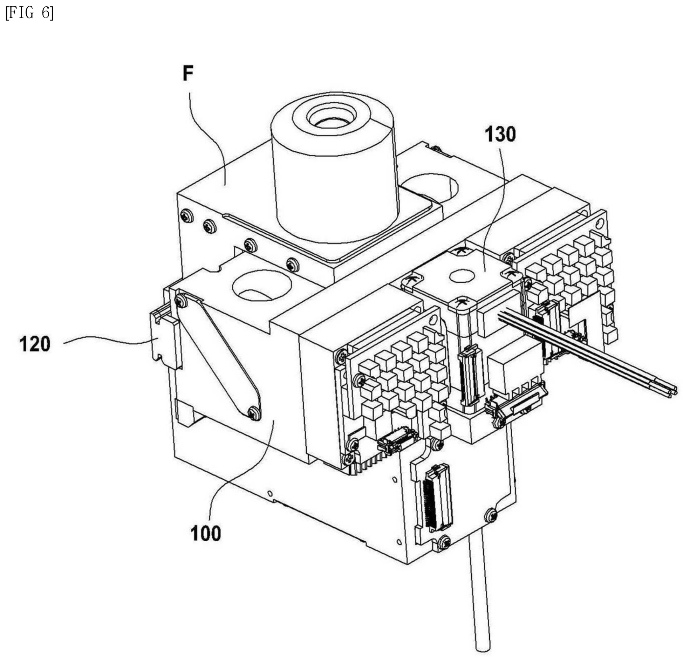

Further, referring to FIGS. 4 to 6, the sliding guide 120 may be assembled to be fitted into and slide along a sliding groove (not illustrated) of a coupling member F (see FIG. 6) fixed to a receptacle.

In an example embodiment, the drive means may further include a guide. In this case, the guide is not particularly limited as long as it is capable of controlling and guiding the operation of the power source. For example, the guide may include a sliding guide for linear movement, a rail or a track for guiding the motion of the power source along a specific path, bearings for reducing friction between parts moving with the operation of the power source to provide a smooth motion, pin(s), shaft(s), and the like.

For example, the drive means may include the motor 130 as the power source and the sliding guide 120 as the guide. In this case, the motor base 110 may be fixed to one side of the surface to which the light module 310 is assembled in the housing 100. The sliding guide 120 may be fixed to the same side as or a different side from the side to which the motor base 110 is fixed.

In an example embodiment, the drive motor 130 may be seated on and fixed to the motor base 110, and a pinion 132 may be fixed to a motor shaft of the drive motor 130. Further, a rack 134 may be fixed to the pinion 132 of the coupling member Fat a position corresponding to the pinion 132. Teeth of the pinion 132 and the rack 134 are engaged with each other.

In another example embodiment, instead of the rack 134 and the pinion 132, a ball screw or a lead screw may be fixed to the drive motor 130. Teeth of these screws may be engaged with teeth of a nut.

In an example embodiment, a linear encoder ENC may be installed on one side of the housing 100. The linear encoder ENC is an electronic element configured to convert a linear motion into an absolute position value. In a case in which the ENC is of a noncontact type, it does not wear out and requires no maintenance. Further, since there is no need to move a reference, the ENC is very useful to find the absolute position value. Thus, the ENC may automatically recognize a sequence and position set in advance by the user and may move based on the same. This makes it possible to accurately align the ENC and prevent occurrence of a defect due to a positional error.

In an example embodiment, a circular encoder configured to read the number of rotations of the drive motor 130 to calculate a position value may be used instead of the linear encoder ENC. Further, a limit switch may be used to physically control the absolute position value. In addition, a sensor configured to measure position information of the housing 100 may be used instead of the linear encoder ENC. Such a sensor may be implemented in combination of one or more types of sensors. For example, by using both the linear encoder ENC and the limit switch, it is possible to more accurately implement the position control. This type of sensor is well known by those skilled in the art.

Specifically, as the drive motor 130 operates, the pinion 132 rotates and moves relative to the rack 134 which is fixedly provided. As a result, the housing 100 to which the drive motor 130 is fixed may slide to change positions of the plurality of fluorescent channels to be used. That is, when the second fluorescent channel needs to be used for observation while the first fluorescent channel is used for observation, the drive motor 130 is operated to move the housing 100. Thus, the second fluorescent channel may be arranged at a position for the observation to observe a sample.

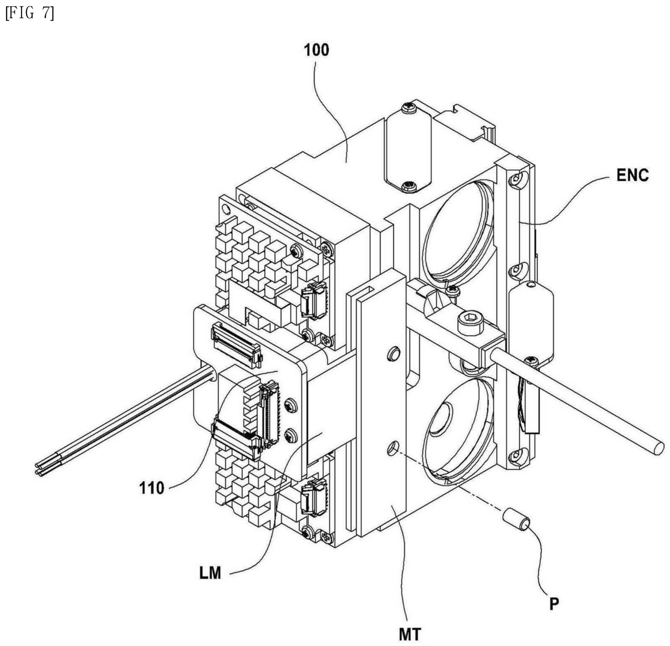

FIG. 7 is an explanatory view illustrating another example of the filter block assembly according to an example embodiment of the present disclosure.

Referring to FIG. 7, a linear motor may be used as the power source of the drive means. In this case, a linear motor LM may be used together with a magnet track MT. For example, as illustrated in FIG. 7, the linear motor LM may be fixed to the motor base 110, and the magnet track MT may be fixed to the coupling member F (see FIG. 6).

In an example embodiment, the magnet track MT may be detachably fixed to the coupling member F with fixing pins P, screws or bolts. The magnet track MT may be formed in a U shape in which an insertion groove is formed. The magnet track MT may be configured to operate while a portion thereof is inserted into the insertion groove. That is, the linear motor LM may reciprocate linearly along the magnet track MT, which is a magnet. Even in this case, a sensor for measuring linear position information, for example, the linear encoder ENC, may be installed to perform the absolute position control. The limit switch may be installed and used instead of the linear encoder ENC.

According to an example embodiment of the present disclosure, a filter block assembly in which two or more channels of fluorescent filter sets and a light source are combined with each other may be provided. In this filter block assembly, a plurality of fluorescent filter sets is applied to a single housing and the light source is provided integrally with the single housing to form a single body without using a carriage in a fluorescent image optical system, which makes it possible to achieve a reduction in size and smoothly implement a precise optical system without causing a defect in power supply.

The filter block assembly according to an example embodiment may be used in the fluorescent image optical system. Thus, an example embodiment of the present disclosure may provide a fluorescent filter block assembly for the fluorescent image optical system.

An example embodiment of the present disclosure may provide a sample image optical system including the fluorescent filter block assembly. In the present disclosure, the "sample image optical system" is not particularly limited as long as it includes an equipment equipped with an optical system capable of imaging a sample. For example, the sample image optical system may include a fluorescent microscope or a live cell imaging equipment. Further, the sample image optical system may include a certain equipment using the fluorescent microscope, for example, a digital pathology instrument/scanner, and the like. In an example embodiment of the present disclosure, the filter block assembly may be provided between an eye lens and an objective lens in the fluorescent image optical system. For example, the filter block assembly may be installed inside the receptacle arranged between the eye lens and the objective lens.

In an example embodiment, the sample image optical system may include the objective lens, the receptacle arranged above the objective lens, the fluorescent filter block assembly arranged inside the receptacle, the eye lens arranged above the fluorescent filter block assembly, and the like

A filter block having a function of shifting and compensating a fluorescent image and a bright-field image according to an example embodiment of the present disclosure may be used in an optical system which captures an image of a shape of a cell using a bright-field microscopy, switches a mode of a microscope, such as a light source and an optical filter, to separately perform a fluorescent microscopy, and then overlaps a fluorescent image and a bright-field image thus obtained.

In this case, the sample image optical system which captures the fluorescent image requires at least two or more fluorescent channels to measure two or more wavelength bands. The sample image optical system configured as above focuses light emitted from a light source of a specific wavelength band by the objective lens to excite a fluorescent substance labeled on the cell, and collects an image of light of a wavelength emitted from the excited fluorescent substance by an image sensor. When a light path is misaligned, the image of light may not be corrected, which causes a severe degradation of quality. Thus, caution needs to be taken to prevent this situation from occurring.

Further, the bright-field image optical system which captures a bright-field image is an optical system for enlarging and illuminating a sample using visible light and an objective lens, which is capable of capturing an image of the sample which appears brightly with respect to a dark background by illuminating the sample from below.

According to an example embodiment of the present disclosure, there is provided a method capable of obtaining a sharper image by automatically performing correction so as not to occur an image shifting by using an optical component for bright-field channel configured such that the bright-field image obtained at the time of the bright field capturing and the fluorescent image obtained at the time of the fluorescent image capturing are the same or overlap with each other in a significant portion. In an example embodiment, the filter block having such an image shifting correction function for the fluorescent image and the bright-field image may include the plurality of fluorescent filters constituting the fluorescent channels and one or more bright-field filters constituting the bright-field channel. In an example embodiment, the bright-field filters may be provided such that the bright-field channel is provided to correspond to the fluorescent channels. The fluorescent filter is used to capture the fluorescent image, and the bright-field filter is used to capture the bright-field image. Thus, the filter block may have a structure in which channels may be used in a replacement manner.

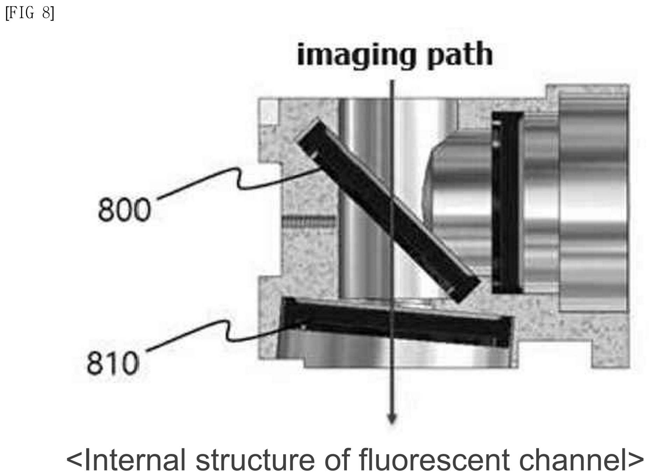

FIG. 8 is an explanatory view illustrating an internal structure of the fluorescent channel according to an example embodiment of the present disclosure.

Referring to FIG. 8, the fluorescent channel may include a dichroic beam splitter 800 arranged at a certain angle with respect to a vertical imaging path, and an emission filter 810 arranged to be spaced downward apart from the dichroic beam splitter 800 and to be inclined at an acute angle clockwise with respect to a horizontal plane. In an example embodiment, the fluorescent channel may further include a light source for generating a fluorescent image (in this case, each fluorescent channel may use a separate light source), an excitation filter, and the like.

In an example embodiment, the fluorescent channel may be provided in the filter block assembly. The filter block assembly may be provided in a sample image optical system. Alternatively, a plurality of fluorescent channels may be provided in the sample image optical system and the filter block assembly.

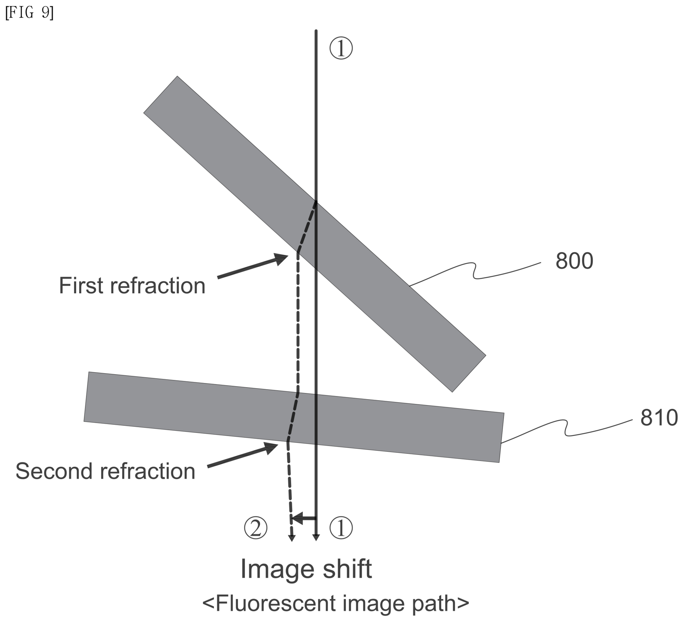

FIG. 9 is a schematic view illustrating a light refraction example by the fluorescent channel in FIG. 8.

Referring to FIG. 9, initial imaging paths of the fluorescent channel and the bright-field channel are identical to each other as a symbol ①. However, when the light of the fluorescent channel is primarily refracted while passing through the dichroic beam splitter 800, and then is secondarily refracted while passing through the emission filter 810. As a result, the imaging paths are shifted as indicated by a symbol ②. Throughout the present disclosure, a variation in light travel path due to different mediums is referred to as a refractive magnitude. That is, the refractive magnitude may mean a degree to which an image with refraction is shifted relative to an image without refraction when an output light is generated while being refracted. In an example embodiment, the refractive magnitude may correspond to a difference caused by shifting the imaging path from ① to ②) by the fluorescent filter. For example, the refractive magnitude may be a concept that includes various travel shift states such as a distance between the imaging paths ① and ②), an angle between a virtual line from a point where the imaging path ② overlaps an eye lens to a light source and the imaging path ①), and the like.

In an example embodiment, when the light passes through Medium 1 (air)-Medium 2 (glass)-Medium 1 (air) twice, the light is refracted so that the initial imaging path may be shifted from ① to ②. That is, the travel path of the light may be shifted from ① to ② to generate the refractive magnitude as described above. More specifically, when light of the first light source of the fluorescent channel is irradiated to a sample and the light emitted from the sample passes through the fluorescent channel, the travel path of the light may be shifted from ① to ②) to generate the refractive magnitude.

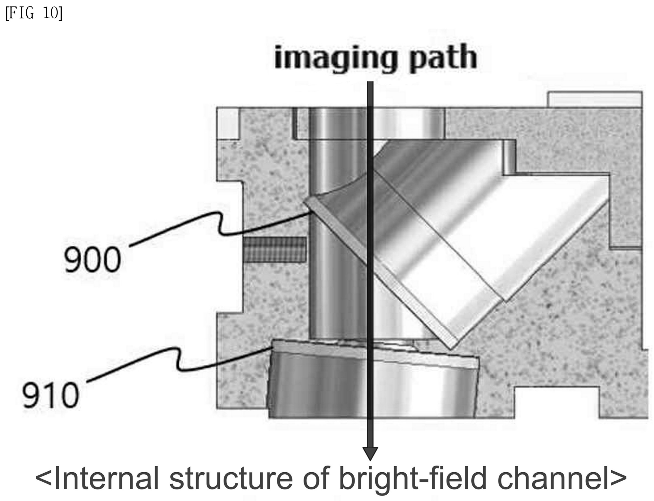

FIG. 10 is an explanatory view illustrating an internal structure of the bright-field channel according to an example embodiment of the present disclosure.

Referring to FIG. 10, the bright-field channel may include one or more windows configured to such that light emitted from the second light source and passed through the sample is refracted while passing through the bright-field channel. In an example embodiment, the one or more windows may be made of a transparent material. For example, the one or more windows may be made of a material such as glass or acrylic.

In an example embodiment, the fluorescent channel may include the dichroic beam splitter 800 and the emission filter 810, and the bright-field channel may include a first window 900 corresponding to the dichroic beam splitter 800 and a second window 910 corresponding to the emission filter 810. The light, which is emitted from the first light source of the fluorescent channel and passed through the sample, is refracted while passing through the dichroic beam splitter 800 and the emission filter 810 to produce a fluorescent image of the sample. Further, the light, which is emitted from the second light source of the bright-field channel and passed through the sample, is refracted while passing through the first window 900 and the second window 910 to produce a bright-field image of the sample. In this case, the bright-field image of the sample, which is produced by passing the light from the second light source of the bright-field channel through the sample, and being refracted while passing through the first window 900 and the second window 910, may overlap substantially with the fluorescent image of the sample, which is produced by passing the light from the first light source of the fluorescent channel through the sample and being refracted while passing through the dichroic beam splitter 800 and the emission filter 810. However, constituent elements of the bright-field channel are not limited to the aforementioned examples. For example, the bright-field channel may include more or fewer constituent element than the constituent elements described above. For example, the brightfield channel may include one window configured such that a final travel path of the light passing through the dichroic beam splitter 800 and the emission filter 810 is identical to a travel path of the light passing through the bright-field channel. Alternatively, the brightfield channel may include three or more windows, and may further include the second light source.

In an example embodiment, even if arrangement angles of the first window 900 and the second window 910 are different from those of the dichroic beam splitter 800 and the emission filter 810, respectively, thicknesses, materials, angles, and the like of the first window 900 and the second window 910 may be set such that the bright-field image produced while passing through the first window 900 and the second window 910 substantially overlaps the fluorescent image generated while passing through the dichroic beam splitter 800 and the emission filter 810.

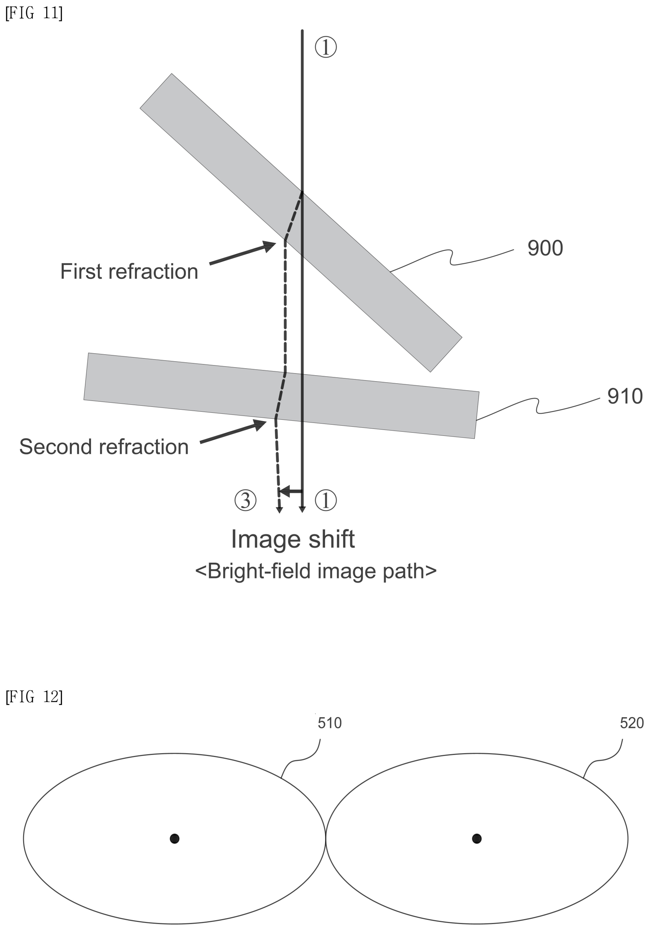

In an example embodiment, a state in which the bright-field image, which is produced by being refracted while passing the light, which is emitted from the second light source and passed through the sample, through the bright-field channel, overlap substantially, by, for example, about 70% or more, with the fluorescent image, which is produced while passing the light of the first light source, which is irradiated onto the sample and emitted from the sample, through the fluorescent channel, will be described first with reference to FIGS. 12 to 14.

FIG. 12 is an explanatory view illustrating a state in which one image and the other image do not overlap with each other at all (that is, by 0%), according to an example embodiment of the present disclosure. In an example embodiment, a state in which boundaries of a fluorescent image 510 and a bright-field image 520 are brought into partial contact with each other but regions of the fluorescent image 510 and the bright-field image 520 do not overlap each other, may be referred to as a state in which the fluorescent image 510 and the bright-field image 520 overlap with each other by 0%. In this case, an image of a target sample may not be sufficiently captured.

FIG. 13 is an explanatory view illustrating a state in which one image and the other image overlap with each other by 100%, according to an example embodiment of the present disclosure. In an example embodiment, a state in which the fluorescent image 510 of the sample and the bright-field image 520 of the sample overlap fully with each other, may be referred to as a state in which the fluorescent image 510 and the bright-field image 520 overlap with each other by 100%. This situation may mean that a refractive magnitude of the light when finally passing through the fluorescent channel and a refractive magnitude of the light when finally passing through the bright-field channel are substantially the same. In this case, an image of a target sample may be sufficiently captured. This state is a very ideal state.

FIG. 14 is an explanatory view illustrating a state in which one image and the other image overlap with each other in a range of more than 0% to less than 100%, according to an example embodiment of the present disclosure. In an example embodiment, a refractive index of the filter for producing the fluorescent image 510 and a refractive index of the filter for producing the bright-field image 520 are partially the same. This situation may mean a state in which the fluorescent image 510 of the sample and the bright-field image 520 of the sample overlap partially with other.

In an example embodiment, an image overlap degree may mean a degree to which a region of the bright-field image of the sample overlaps the entire region of the fluorescent image as a reference.

In an example embodiment, a refractive magnitude of the light when passing through the dichroic beam splitter 800 in the fluorescent channel may be equal to a refractive magnitude of the light, which is emitted from the second light source of the bright-field channel and passed through the sample, when passing through the first window 900. Alternatively, a difference between these refractive magnitudes may be in a certain range. Further, a refractive magnitude of the light when passing through the emission filter 810 in the fluorescent channel may be equal to a refractive magnitude of the light when passing through the second window 910 in the bright-field channel. Alternatively, a difference between these refractive magnitudes may be in a certain range.

For example, the bright-field channel may include the first window 900 arranged at a position corresponding to the dichroic beam splitter 800 and at a first preset angle with respect to a vertical imaging path, and a second window 910 arranged at a position corresponding to the emission filter 810 and at a second preset angle with respect to the vertical imaging path. The first window 900 may be made of the same material as the dichroic beam splitter 800, and the second window 910 may be made of the same material as the emission filter 810. Further, even if at least one of the first window 900 and the second window 910 are not installed in the bright-field channel at the first and second preset angles at the positions corresponding to the dichroic beam splitter 800 and emission filter 810, the bright-field image of the sample, which is produced when the light of the bright-field channel is refracted while passing through the first window 900 and the second window 910, may overlap substantially (for example, by 70% or more) with the fluorescent image of the sample, which is produced when the light of the fluorescent channel is refracted while passing through the dichroic beam splitter 800 and the emission filter 810.

In an example embodiment, even in a case in which one window is provided in the bright-field channel or a case in which a plurality of windows is provided in the bright-field channel, the fluorescent image of the sample, which is produced when the light of the fluorescent channel is refracted while passing through the dichroic beam splitter 800 and the emission filter 810, may overlap substantially (for example, by 70% or more) with the bright-field image of the sample, which is produced when the light of the bright-field channel is refracted while passing through one window or the plurality of windows provided in the bright-field channel.

In an example embodiment, a plurality of fluorescent channels may be provided. In this case, the bright-field image, which is refracted while passing through the bright-field filter, may overlap substantially (for example, by about 70% or more) with the fluorescent image, which is refracted while passing through one of the plurality of fluorescent channels. For example, in a case in which the plurality of fluorescent channels includes a first fluorescent channel provided with a (1-1)st light source and a second fluorescent channel provided with a (1-2)nd light source, the bright-field image, which is produced when light emitted from the second light source of the bright-field channel is refracted while passing through the bright-field channel after passing through the sample, may overlap substantially (for example, by about 70% or more) with a first fluorescent image, which is produced when light is refracted while passing through the first fluorescent channel and/or a second fluorescent image, which is produced when light is refracted while passing through the second fluorescent channel. In this case, both fluorescent images, that is, the first fluorescent image and the second fluorescent image may also overlap substantially (for example, by about 70% or more) with each other. Accordingly, in another example embodiment, the first fluorescent image, the second fluorescent image and the bright-field image may overlap substantially with each other by at least 50% or more, specifically about 60% or more, more specifically about 70% or more, more specifically about 80% or more, more specifically about 90% or more, even more specifically 100%.

However, this configuration is merely an example. The bright-field channel may be designed such that the bright-field image produced when passing through the bright-field channel may overlap substantially with at least one of the fluorescent images produced when passing through the plurality of fluorescent channels. As described above, the plurality of fluorescent images produced as above may also overlap substantially with each other.

FIG. 11 is a schematic view for explaining a light refraction example by a bright-field filter block in FIG. 10.

In general, initial imaging paths of the fluorescent channel and the bright-field channel are the same (*see* ① illustrated in FIGS. 9 and 11). However, unlike the fluorescent channel including a filter which refracts light, refraction of light is not generated in a typical bright-field channel in the related art. Thus, light passed through the fluorescent channel is subject to image shifting due to light refraction, which causes a mismatch between the fluorescent image and the bright-field image. Thus, the images are not clear and appear blurred. This makes it difficult to obtain a precise image.

In order to produce a final image by overlapping the fluorescent image produced when passing through the fluorescent channel with the bright-field image produced when passing through the bright-field channel without a separate image correction procedure, it is necessary to adjust a degree of the bright-field image shifted after passing through the bright-field channel to be equal to or similar to a degree of the fluorescent image shifted after passing through the fluorescent channel.

Referring to FIG. 11, the bright-field channel may include at least one window to correspond to the fluorescent channel. For example, the case in which the bright-field channel includes the first window 900 corresponding to the dichroic beam splitter 800 and the second window 910 corresponding to the emission filter 820, the light, which is emitted from the light source of the bright-field channel and passed through the sample, is primarily refracted while passing through the first window 900, and is secondarily refracted while passing through the second window 910 so that image shifting occurs as indicated by ③. In this case, a degree of the image shifting may be equal to or similar to a degree of image shifting occurred by the fluorescent filter. According to an example embodiment, the image shifting occurs as indicated by ② in FIG. 9. Thus, the two images passing through the two channels overlap with each other such that they are arranged at the same position. In other words, the two images overlap substantially with each other.

Through this, the automatic image shifting correction function is achieved.

In an example embodiment, in order to make the image shifting by the fluorescent filter and the image shifting by the bright-field filter equal to each other, the first window 900 may be arranged at the position corresponding to the dichroic beam splitter 800 and at the first preset angle with respect to the vertical imaging path, the second window 910 may be arranged at the position corresponding to the emission filter 810 and at the second preset angle with respect to the vertical imaging path.

In an example embodiment, the first window 900 and/or the second window 910 may be made of a transparent material, specifically glass, acrylic material or the like.

In an example embodiment, a thickness, material, and angle of each of the first window 900 and the second window 910 may be set such that the refractive magnitudes by the first window 900 and the second window 910 are equal to the refractive magnitude by the dichroic beam splitter 800 and the refractive magnitude by the emission filter 810, respectively, that is, such that the fluorescent image and the bright-field image, which are produced by the refraction, overlap with each other by 70% or more. For example, even if the thicknesses of the first window 900 and the second window 910 are different from those of the dichroic beam splitter 800 and the emission filter 810, respectively, the thicknesses, the materials and the like of the first window 900 and the second window 910 may be adjusted such that the refractive magnitudes by the first window 900 and the second window 910 are equal to those by the dichroic beam splitter 800 and the emission filter 810, or such that the two images overlap substantially with each other. In this way, the image shifting correction is performed.

Further, for example, even if the first window 900 and the second window 910 are arranged at different angles from those of the dichroic beam splitter 800 and the emission filter 810, the thicknesses, the materials, and the like of the first window 900 and the second window 910 may be adjusted such that the refractive magnitudes by the first window 900 and the second window 910 are equal to those by the dichroic beam splitter 800 and the emission filter 810. In this way, the image shifting correction is performed. As a result, the two images may overlap substantially with each other.

Further, for example, even if the materials of the first window 900 and the second window 910 are different from those of the dichroic beam splitter 800 and the emission filter 810, the thicknesses, the angles, and the like of the first window 900 and the second window 910 may be adjusted such that the refractive magnitudes by the first window 900 and the second window 910 are equal to those by the dichroic beam splitter 800 and the emission filter 810. In this way, the image shifting correction is performed. As a result, the two images may overlap substantially with each other.

With this configuration, since the light path of the fluorescent channel and the light channel of the bright-field channel coincide with each other, it is possible to eliminate a need to perform an additional correction or compensation operation.

In addition, according to an example embodiment, various bright-field channels may be further used regardless of the image shifting by the fluorescent channel. This configuration is more economical than using the fluorescent filter block specially designed so as not to generate the refraction in the light path of the fluorescent channel. Further, it is not necessary to perform image processing to compensate for the image shifting or physically move the stage. Thus, the results may be obtained relatively quickly.

In an example embodiment, the sample image optical system according to the present disclosure may include other optical components without any particular limitations as long as they use both the fluorescent image and the bright-field image. For example, the sample image optical system may include a fluorescent microscope, a live cell imaging device, a digital pathology scanner device, and the like. Further, the sample image optical system may include the filter block assembly described above with reference to FIGS. 1 to 7.

In an example embodiment, the sample image optical system may include an objective lens, a receptacle arranged above the objective lens, a fluorescent channel and a bright-field channel arranged inside the receptacle, an eye lens arranged above the receptacle, and the like.

Further, the eye lens may include a first CCD for capturing a bright-field image of a measurement object and a second CCD for capturing a fluorescent image of the measurement object. The first CCD and the second CCD may operate in synchronization to simultaneously capture the bright-field image and the fluorescent image. The sample image optical system according to an example embodiment of the present disclosure may be configured such that light from the second light source, which passes through a sequence of a notch filter, an objective lens, a first dichroic splitter and a second dichroic splitter, is input to the first CCD where the bright-field image is captured. At the same time, light from the first light source is reflected by the first dichroic splitter and irradiated to the measurement object so that a fluorescent image signal is generated in a cell of the measurement object. Subsequently, the light is focused by the objective lens, reflected by the second dichroic splitter, and input to the second CCD via the emission filter. The second CCD captures the fluorescent image of the measurement object.

In an example embodiment, in the sample image optical system, the bright-field image and the fluorescent image overlap with each other at the same position on the x-y plane to produce an overlapped image.

In addition, fluorescent channels of various colors may be further used regardless of the image shifting by the bright-field channel. This configuration is more economical than using the fluorescent filter block specially designed so as not to generate the refraction in the light path of the fluorescent channel. Further, it is not necessary to perform image processing to compensate for the image shifting or physically move the stage. Thus, the results may be obtained relatively quickly.

Further, an apparatus for correcting an image using the filter block according to an example embodiment of the present disclosure may obtain a fluorescent image using a fluorescent filter forming a fluorescent channel, obtain a bright-field image using a bright-field filter forming a bright-field channel corresponding to the fluorescent channel, and obtain a corrected image based on the fluorescent image and the bright-field image. Further, the apparatus for correcting an image using the filter block comparing the fluorescent image with the bright-field image to detect a degree of refraction, and shift at least one of the fluorescent image and the bright-field image based on the degree of refraction to obtain a corrected image. An operation of shifting at least one of the fluorescent image and the bright-field image may be performed by software.

FIG. 13A is an explanatory view of a filter block assembly with which a light source is integrated according to an example embodiment of the present disclosure.

FIG. 13B is a cross-sectional view of the filter block assembly taken along line A-A in FIG. 13A. FIG. 13C is an explanatory view of the filter block assembly of FIG. 13A when viewed at another angle.

Referring to FIGS. 13A to 13C, the filter block assembly may include a housing 600, a plurality of (for example, two or more) fluorescent filter sets 700 incorporated in the housing 600, and a light source 300 assembled ton the housing 600 to provide lighting. In an example embodiment, fluorescent channels and a bright-field channel may be formed by the filter block assembly. For example, as illustrated in FIG. 13A, two fluorescent channels by the two fluorescent filter sets may be formed on both sides of the housing 600, and the bright-field channel may be formed at the center of the housing 600.

Throughout the present disclosure, the term "built-in" or "assembling" used in relation to the housing may refer to a configuration in which respective parts such as the fluorescent channel, the light source, the bright-field channel, and the like are provided integrally in one housing without being individually provided. However, the respective parts are merely physically integrated with each other, and may be configured to perform unique functions assigned thereto or provide respective effects independently of each other. Thus, the fluorescent filter block assembly according to an example embodiment may include no plate or carriage. That is, the filter block assembly according to an example embodiment may be configured to include one housing, and may not require a separate structure for receiving each filter set or filter block.

In an example embodiment, one or more fluorescent filter sets 700 may be provided to be integrated with the housing 600, thereby implementing one or more fluorescent channels.

In an example embodiment, each fluorescent filter set 700 may include three fluorescent parts such as an excitation filter 710, a dichroic beam splitter 720, and an emission filter 730. Further, in each fluorescent filter set 700, the excitation filter 710, the dichroic beam splitter 720, and the emission filter 730 may be arranged sequentially with reference to the light source 300. The three fluorescent parts included in each fluorescent filter set 700 may be formed in various shapes, such as a circular shape, a polygonal shape, a star shape, an elliptical shape and the like. However, the fluorescent filter set 700 has been described to include the above-described three fluorescent parts but is not limited thereto. Further, the fluorescent filter set 700 may be constituted with any fluorescent parts without particular limitations as long as they can extract light of a specific wavelength among light of various wavelengths. For example, a filter which transmits light with a constant transmittance regardless of wavelengths, a correction filter which adjusts the intensity of light in a specific wavelength range, a broadband filter, and the like may be used as the fluorescent parts. In addition, these filters may be classified into a filter for an infrared region, a filter for a visible region, a filter for an ultraviolet region, a filter for a vacuum ultraviolet region, and the like depending on frequency ranges to be used.

In an example embodiment, in a state in which the light source 300 is fixed to the light module 310, the light module 310 may be assembled to one side end of the housing 600 so that the light source 300 is integrated with the housing 600.

In an example embodiment, a focusing lens 740 may be further installed between the light source 300 and the fluorescent filter sets 700, such as excitation filter 710. Further, the focusing lens 740 may be configured such that one or a plurality are installed to further increase the collecting quality.

In an example embodiment, the housing 600 may be configured to slide linearly such that the plurality of fluorescent channels may be replaced and used. For example, the housing 600 may be configured such that two fluorescent channels and one bright-field channel may be replaced and used. For this purpose, the housing 600 may further include a drive motor and a sliding guider. For example, a motor base 610 may be fixed to one side of the housing 600 to which the light module 310 is assembled, and the sliding guider 620 may be fixed integrally to the opposite side of the housing 600 on which the motor base 610 is installed.

In an example embodiment, the sliding guider 620 may be assembled to the housing 600 such that the sliding guider 620 is fitted into a sliding groove of a coupling member fixed to the receptacle and slides along the sliding groove.

In an example embodiment, the drive motor is seated on and fixed to the motor base 610, and a pinion 630 is fixed to a motor shaft of the drive motor. Further, a rack 640 is fixed to a position corresponding to the pinion 630 in the coupling member. Teeth of the pinion 630 is engaged with teeth of the rack 640. With this configuration, as the drive motor operates, the pinion 630 rotates and moves relative to the rack 640 fixed thereto. As a result, the housing 600 to which the drive motor is fixed may slide to change positions of the plurality of fluorescent channels. That is, when a first fluorescent channel needs to be changed to a second fluorescent channel for observation, the drive motor may be operated to move the housing 600. Thus, the second fluorescent channel may be arranged at an observation position at which the sample may be observed.

According to an example embodiment of the present disclosure, it is possible to provide the filter block assembly in which two or more channels of fluorescent filter sets and light sources are combined and having an improved configuration in which no carriage is used, a plurality of fluorescent filter sets is provided in one housing, and a light source is integrated with the housing to form one body, thus implementing a precise sample image optical system in a smooth manner without causing a defect in power supply while reducing the size of the system.

In an example embodiment of the present disclosure, the dichroic beam splitter is inserted into and fixed to the side insertion port. This may eliminate assembling mistakes compared to an individual configuration. Further, according to an example embodiment of the present disclosure, fulfillment or inventory management may be made easily and an assembling operation is simple, which may increase productivity compared to the individual configuration. Further, according to an example embodiment of the present disclosure, the dichroic beam splitter is brought into close contact with and fixed to the reference plane by the elastic body. This is advantageous in terms of vibration, impact, and the like. An example embodiment of the present disclosure may be implemented in the form of a recording medium including instructions executable by a computer, such as a program module executed by the computer. A computer-readable medium may be a certain usable medium to which the computer is accessible, and may include a volatile medium, a non-volatile medium, a removable medium, and a non-removable medium. Further, the computer-readable medium may include a computer-readable storage medium and a communication medium. The computer-readable storage medium may include a volatile medium, a non-volatile medium, a removable medium, and a non-removable medium, which are implemented by a certain method or technology to store information such as computer-readable instructions, data structures, program modules, or other pieces of data. The communication medium typically includes computer-readable instructions, data structures, or program modules, and also includes any information delivery medium.

The foregoing description of the present disclosure is merely an example. It will be understood by those skilled in the art that variations are readily possible in other specific forms without changing the technical ideas or essential features of the present disclosure. Therefore, it should be noted that the example embodiments described above are exemplary in all respects and are not restrictive. For example, each constituent element that is described in a single form may be embodied in a distributed fashion. Similarly, constituent elements that are described in the distributed fashion may be embodied in a combined fashion.

The scope of the present disclosure should be construed within the appended claims rather than the foregoing detailed description, and it is intended that all changes or modifications that come from the meaning and scope of the claims and their equivalent concept be embraced therein.

## Claims

1. A sample image optical system, comprising:
a fluorescent channel including a first light source; and
a bright-field channel including a second light source,
wherein a first light of the first light source, which is irradiated onto a sample and emitted from the sample, is refracted while passing through the fluorescent channel to produce a fluorescent image of the sample,
wherein a second light of the second light source, which passes through the sample, is refracted while passing through the bright-field channel to produce a bright-field image of the sample, and
wherein the fluorescent image and the bright-field image overlap with each other by 70% or more.

2. The sample image optical system of Claim 1, wherein the bright-field channel includes one or more windows configured such that the second light of the second light source, which passes through the sample, is refracted while passing through the bright-field channel.

3. The sample image optical system of Claim 2, wherein each of the one or more windows is made of a transparent material.

4. The sample image optical system of Claim 1, wherein the fluorescent channel includes a dichroic beam splitter and an emission filter, and
wherein the first light of the first light source, which is irradiated onto the sample and emitted from the sample, is refracted while passing through the dichroic beam splitter and the emission filter to produce the fluorescent image of the sample.

5. The sample image optical system of Claim 1, wherein the bright-field channel includes a first window and a second window, and
wherein the second light of the second light source, which passes through the sample, is refracted while passing through the first window and the second window to produce the bright-field image of the sample.

6. The sample image optical system of Claim 1, wherein the fluorescent channel includes a dichroic beam splitter and an emission filter, and the first light of the first light source, which is irradiated onto the sample and emitted from the sample, is refracted while passing through the dichroic beam splitter and the emission filter to produce the fluorescent image of the sample, and
wherein the bright-field channel includes a first window and a second window, and the second light of the second light source, which passes through the sample, is refracted while passing through the first window and the second window to produce the bright-field image of the sample.

7. The sample image optical system of Claim 6, wherein the first window is arranged at a position corresponding to the dichroic beam splitter, and the second window is arranged at a position corresponding to the emission filter.

8. The sample image optical system of Claim 6, wherein a thickness, a material, and an angle of each of the first window and the second window are set such that the fluorescent image and the bright-field image overlap with each other by 70% or more.

9. A filter block assembly, comprising:
a housing;
a side insertion port formed in a side surface of the housing at a certain angle with a bottom surface of the housing;
a reference surface formed inward of the side insertion port;
a support surface formed inward of the side insertion port to face the reference surface; and
a cover configured to open and close the side insertion port,
wherein a beam splitter is inserted into the side insertion port or is replaced with a new beam splitter via the side insertion port.

10. The filter block assembly of Claim 9, wherein an elastic body is inserted into the side insertion port together with the beam splitter.

11. The filter block assembly of Claim 10, wherein the beam splitter is brought into close contact with the reference surface by the elastic body.

12. The filter block assembly of Claim 9, wherein the beam splitter is a dichroic beam splitter; and
wherein the reference surface is formed such that the dichroic beam splitter is arranged at an angle of 45 degrees ±1.5 degrees with respect to at least one of an excitation filter or an emission filter.

13. The filter block assembly of Claim 12, wherein the housing includes:
a first opening in which the emission filter is mounted;
a second opening in which the excitation filter is mounted;
an excitation-filter coupling portion formed in a threaded shape in a surface of the first opening, which is exposed outward of the filter block assembly; and
an emission-filter coupling portion formed in a threaded shape in a surface of the second opening, which is exposed outward of the filter block assembly,
wherein a surface in which the first opening is formed, a surface in which the second opening is formed, and the side surface of the housing are adjacent to each other.

14. The filter block assembly of Claim 9, further comprising: a plurality of fluorescent channels and one or more bright-field channels,
wherein the side insertion port, the reference surface, the support surface, and the cover are provided in each of the plurality of fluorescent channels,
wherein at least a first light source is assembled to at least one of the plurality of fluorescent channels, and a second light of a second light source passes through the one or more bright-field channels,
wherein a first light of the first light source, which is irradiated onto a sample and emitted from the sample, is refracted while passing through at least one of the plurality of fluorescent channels to produce a fluorescent image of the sample,
wherein a second light of the second light source, which passes through the sample, is refracted while passing through at least one of the one or more bright-field channels to produce a bright-field image of the sample, and
wherein the fluorescent image and the bright-field image overlap with each other by 70% or more.
